# EUROPEAN PATENT APPLICATION

(11) **EP 4 694 257 A1**
(43) Date of publication of application: **11.02.2026**
(21) Application number: 24802988.6
(22) Date of filing: 07.05.2024
(51) Int. Cl.: H04W 12/0433

(54) **COMMUNICATION METHOD AND APPARATUS**

(30) Priority: 11.05.2023 CN 202310532302
(71) Applicant: Huawei Technologies Co., Ltd., Shenzhen, Guangdong 518129 (CN)
(72) Inventor: LEI, Ao, Shenzhen, Guangdong 518129 (CN); WU, Yizhuang, Shenzhen, Guangdong 518129 (CN); LI, He, Shenzhen, Guangdong 518129 (CN)
(74) Representative: MERH-IP Matias Erny Reichl Hoffmann Patentanwälte PartG mbB
(86) International application number: PCT/CN2024/091535
(87) International publication number: WO 2024/230708

(57) **Abstract**

This application provides a communication method and an apparatus, to improve reliability of a device discovery process in proximity-based service communication, so as to enhance proximity-based service communication performance. The method may be implemented in the following steps: After receiving a security parameter obtaining request from a first communication apparatus, a first discovery key management network element obtains an identifier of a target network from a first network element, where the first request may include an identifier of a proximity-based service, the identifier of the target network corresponds to the identifier of the proximity-based service, the target network is a home network of a second communication apparatus, and the second communication apparatus is configured to provide the proximity-based service for the first communication apparatus. Then, the first discovery key management network element may further send a second request to a second discovery key management network element in the target network to request the security parameter, and may send, to a first terminal apparatus, the security parameter obtained from the second discovery key management network element.

## Description

### CROSS-REFERENCE TO RELATED APPLICATIONS

This application claims priority to Chinese Patent Application No. 202310532302.2, filed with the China National Intellectual Property Administration on May 11, 2023 and entitled "COMMUNICATION METHOD AND APPARATUS", which is incorporated herein by reference in its entirety.

### TECHNICAL FIELD

This application relates to the field of mobile communication technologies, and in particular, to a communication method and an apparatus.

### BACKGROUND

Device-to-device (device-to-device, D2D) communication allows direct communication between user equipments (user equipments, UEs), and the user equipments may share spectrum resources with cell users under control of a cell network, so that utilization of the spectrum resources is effectively improved. Currently, D2D communication has been applied to a 5th generation mobile communication (4th generation mobile network, 4G) network system, and is collectively referred to as a proximity-based service (proximity-based service, ProSe) communication service.

Currently, due to low reliability of a device discovery process in proximity-based service communication, efficiency of the discovery process is reduced.

### SUMMARY

This application provides a communication method and an apparatus, to improve reliability of a device discovery process in proximity-based service communication, so as to improve efficiency of the discovery process.

According to a first aspect, a communication method is provided. The method may be implemented by a first discovery key management network element or a component in the first discovery key management network element. The first discovery key management network element may be a discovery name management function or a proximity-based service key management function. The component in this application may include, for example, at least one of a chip, a chip system, a processor, a transceiver, a processing unit, or a transceiver unit. For example, the communication method is performed by the first discovery key management network element. The method may be implemented in the following steps: The first discovery key management network element may receive a first request from a first communication apparatus, where the first request may be used to request a security parameter used for discovery of a terminal apparatus. The first request may include an identifier of a proximity-based service, and the proximity-based service may be a proximity-based service provided by a second communication apparatus for the first communication apparatus. Based on the first request, the first discovery key management network element may obtain, from a first network element, an identifier of a target network corresponding to the identifier of the proximity-based service, where the target network is a home network of the second communication apparatus. Then, the first discovery key management network element may further send a second request to a second discovery key management network element in the target network, to request the security parameter. The first discovery key management network element may receive the security parameter from the second discovery key management network element, and send the security parameter to the first terminal apparatus.

According to the method in the first aspect, the identifier of the proximity-based service corresponds to the identifier of the target network. Therefore, the first discovery key management network element may obtain, from the first network element, the identifier of the target network corresponding to the identifier of the proximity-based service, and may send a security parameter obtaining request, namely, a second request, to the second discovery key management network element in the target network, to request a security parameter of a discovery process in the proximity-based service. Therefore, the first discovery key management network element can accurately and efficiently determine the second discovery key management network element. This reduces a waste of signaling, processing resources, and a delay in a security parameter obtaining process, and improves efficiency of the discovery process.

In a possible implementation, the first discovery key management network element may send a network identifier obtaining request to the first network element, where the network identifier obtaining request is used to request the identifier of the target network, and the network identifier obtaining request includes the identifier of the proximity-based service. Therefore, the first discovery key management network element may send, to the first network element, the identifier of the proximity-based service carried in the first request, to accurately obtain the identifier of the target network.

In a possible implementation, if the first discovery key management network element obtains, from the first network element, at least one first network identifier including the identifier of the target network, and the first discovery key management network element further receives at least one second network identifier from the first communication apparatus, the first discovery key management network element may determine the target network based on the second network identifier and the at least one first network identifier. Each first network identifier corresponds to the identifier of the proximity-based service, and the second network identifier identifies a network that is allowed to provide the proximity-based service for the first communication apparatus.

According to this implementation, a network that is both the home network of the second communication apparatus and the network that is allowed to provide the proximity-based service for the first communication apparatus can be more accurately determined as the target network, to avoid a case in which the security parameter is requested from a network that is not allowed to provide the proximity-based service for the first communication apparatus. This increases a success rate of obtaining the security parameter, further reduces a waste of signaling, processing resources, and a delay in the security parameter obtaining process, and improves efficiency of the discovery process.

In a possible implementation, the first discovery key management network element stores a correspondence between the identifier of the proximity-based service and the identifier of the target network.

According to this implementation, after receiving a discovery key request that carries the identifier of the proximity-based service again, the first discovery key management network element may determine, based on the stored correspondence, at least one first network identifier corresponding to the identifier of the proximity-based service. Therefore, the first discovery key management network element does not need to request the first network element again for the identifier of the network corresponding to the identifier of the proximity-based service. This can further reduce a waste of signaling, processing resources, and a delay in the security parameter obtaining process, and improve efficiency of the discovery process.

In a possible implementation, the first discovery key management network element may receive a security parameter announcing message from the second discovery key management network element, where the security parameter announcing message includes the security parameter and an identifier of the security parameter. Correspondingly, the first discovery key management network element sends a security parameter response message to the first communication apparatus, where the security parameter response message includes the security parameter and the identifier of the security parameter. It may be understood that, during sending by the second discovery key management network element to the first discovery key management network element, and/or during sending by the first discovery key management network element to the first communication apparatus, the security parameter and the identifier of the security parameter may alternatively be carried in a message other than the message described, and/or the security parameter and the identifier of the security parameter may be carried in a same message or different messages.

According to this implementation, the identifier of the security parameter may identify a specific security parameter used to protect a discovery message, and/or identify a specific security parameter to be used to process the protected discovery message. Therefore, based on the identifier of the security parameter, a receiving device of the discovery message can accurately determine a specific security parameter to be used to process the protected discovery message, so as to avoid a case in which the receiving device uses a plurality of sets of security parameters to separately execute a discovery procedure for trial and error to ensure that the receiving device establishes a connection to a sending device of the discovery message. This can reduce a waste of signaling, processing resources, and a delay.

According to a second aspect, a communication method is provided. The method may be implemented by a first network element. The first network element may be a core network element or a component in the core network element. The component in this application may include, for example, at least one of a chip, a chip system, a processor, a transceiver, a processing unit, or a transceiver unit. For example, the communication method is performed by the first network element. The method may be implemented in the following steps: The first network element may determine an identifier of a target network corresponding to an identifier of a proximity-based service, where the proximity-based service may be provided by a second communication apparatus for a first communication apparatus. The first network element sends the identifier of the target network to a first discovery key management network element, where the target network is a home network of the second communication apparatus.

In a possible implementation, the first network element may further receive a network identifier obtaining request from the first discovery key management network element, where the network identifier obtaining request is used to request the identifier of the target network, and the network identifier obtaining request includes the identifier of the proximity-based service.

In a possible implementation, the first network element may further determine at least one first network identifier corresponding to the identifier of the proximity-based service, where the at least one first network identifier includes the identifier of the target network. The first network element may further send the at least one first network identifier to the first discovery key management network element.

In a possible implementation, the first network element determines that the first network element does not allocate a security parameter to the proximity-based service; or the first network element determines that the first discovery key management network element allocates a security parameter to the proximity-based service. Therefore, when the first discovery key management network element manages the security parameter of the proximity-based service, or the first network element does not manage the security parameter, the first network element can accurately obtain an identifier of the home network of the second communication apparatus, so that the first network element obtains the security parameter from a discovery key management network element in the home network of the second communication apparatus, to improve efficiency of obtaining the security parameter.

In a possible implementation, if the first network element determines that the security parameter of the proximity-based service is managed by the first network element, the second discovery key management network element does not need to provide the security parameter, and the first network element may reject sending the identifier of the target network to the first discovery key management network element, to reduce signaling overheads and processing overheads for subsequently obtaining the security parameter.

In a possible implementation, the first network element stores a correspondence between the first discovery key management network element and the identifier of the proximity-based service, so that after subsequently receiving the network identifier obtaining request that carries the identifier of the proximity-based service, the first network element determines, based on the stored identifier of the proximity-based service, that a first network identifier corresponding to the identifier of the proximity-based service has been requested. Therefore, the first network element does not need to provide the first network identifier to the first discovery key management network element again, to avoid processing overheads and signaling overheads caused by repeated queries, and prevent another network element from pretending to be the first discovery key management network element to obtain the first network identifier. For example, the first network element may further receive the network identifier obtaining request from the first discovery key management network element, where the network identifier obtaining request is used to request the network identifier of the target network, and the request message includes the identifier of the proximity-based service. Because the correspondence between the first discovery key management network element and the identifier of the proximity-based service is stored, the first network element may determine, based on the correspondence between the first discovery key management network element and the identifier of the proximity-based service, to reject the network identifier obtaining request. Further, the first network element may send a reject message to the first discovery key management network element in response to the network identifier obtaining request.

For beneficial effects of the second aspect and the possible implementations, refer to the descriptions of the beneficial effects of the first aspect and the corresponding implementations. Repeated parts are not described again.

According to a third aspect, a communication method is provided. The method may be implemented by a first terminal apparatus. The first terminal apparatus may be a terminal device or a component in the terminal device. For example, the communication method is performed by the first terminal apparatus. The method may be implemented in the following steps: The first communication apparatus obtains the security parameter and the identifier of the security parameter from the first discovery key management network element. For descriptions of the security parameter and the identifier of the security parameter, refer to the descriptions in the first aspect. Repeated parts are not described again.

In a possible implementation, the first communication apparatus sends a first discovery message, where the first discovery message is used for discovery of the second communication apparatus, and the first discovery message is protected by using the security parameter.

In a possible implementation, the first discovery message includes the security parameter and the identifier of the security parameter.

In a possible implementation, the first communication apparatus receives a second discovery message, where the second discovery message includes the security parameter and the identifier of the security parameter, and the second discovery message is used for discovery of the first communication apparatus; the first communication apparatus determines the security parameter based on the identifier of the security parameter; and the first communication apparatus processes the second discovery message based on the security parameter.

For beneficial effects of the method in the third aspect and the possible implementations, refer to the descriptions of the beneficial effects of the first aspect and the corresponding implementations. Repeated parts are not described again.

According to a fourth aspect, a communication method is provided. The method may be implemented by a first discovery key management network element or a component in the first discovery key management network element. The first discovery key management network element may be a discovery name management function or a proximity-based service key management function. For example, the communication method is performed by the first discovery key management network element. The method may be implemented in the following steps: The first discovery key management network element receives a first request from a first communication apparatus, where the first request is used to request a security parameter, the security parameter is used for discovery of a communication apparatus, the first request includes an identifier of a proximity-based service and an identifier of a target network corresponding to the identifier of the proximity-based service, the target network is a home network of a second communication apparatus, and the proximity-based service is a service provided by the second communication apparatus for the first communication apparatus. The first discovery key management network element sends a second request to a second discovery key management network element in the target network, where the second request is used to request the security parameter. The first discovery key management network element receives the security parameter from the second discovery key management network element. The first discovery key management network element sends the security parameter to the first communication apparatus.

According to the method in the fourth aspect, the first discovery key management network element may obtain a correspondence between the identifier of the proximity-based service and the identifier of the target network. Therefore, the first discovery key management network element sends a security parameter obtaining request, namely, a second request, to the second discovery key management network element in the target network, to request a security parameter of a discovery process in the proximity-based service. Therefore, the first discovery key management network element can accurately and efficiently determine the second discovery key management network element. This reduces a waste of signaling, processing resources, and a delay in a security parameter obtaining process, and enhances performance of the discovery process.

In a possible implementation, the first request includes the identifier of the proximity-based service and at least one first network identifier corresponding to the identifier of the proximity-based service, where the at least one first network identifier includes the identifier of the target network, and the at least one first network identifier corresponds to the identifier of the proximity-based service. The first discovery key management network element may further receive at least one second network identifier from the first communication apparatus, where the second network identifier identifies a network that is allowed to provide the proximity-based service for the first communication apparatus. The first discovery key management network element may further determine the target network based on the second network identifier and the at least one first network identifier. Then, the first discovery key management network element may send the second request to the second discovery key management network element in the target network.

In a possible implementation, the first discovery key management network element may receive the security parameter and an identifier of the security parameter from the second discovery key management network element. The first discovery key management network element may send a security parameter response message to the first communication apparatus, where the security parameter response message includes the security parameter and the identifier of the security parameter.

For beneficial effects of the method in the fourth aspect and the possible implementations, refer to the descriptions of the beneficial effects of the first aspect and the corresponding implementations. Repeated parts are not described again.

According to a fifth aspect, a communication method is provided. The method may be implemented by a first terminal apparatus. The first terminal apparatus may be a terminal device or a component in the terminal device. For example, the communication method is performed by the first terminal apparatus. The method is implemented in the following steps: The first communication apparatus sends a first request to a first discovery key management network element, where the first request is used to request a security parameter, the first request includes an identifier of a proximity-based service and an identifier of a target network corresponding to the identifier of the proximity-based service, the proximity-based service is a proximity-based service provided by a second communication apparatus for the first communication apparatus, and the target network is a home network of the second communication apparatus. The first communication apparatus receives the security parameter from the first discovery key management network element.

According to the method in the third aspect, the first terminal apparatus may provide a correspondence between the identifier of the proximity-based service and the identifier of the target network to the first discovery key management network element. This helps the first discovery key management network element efficiently determine the identifier of the target network, so that the first discovery key management network element can send a security parameter obtaining request to a second discovery key management network element in the target network based on the correspondence, to obtain the security parameter. Therefore, the method can improve efficiency of a discovery process.

In a possible implementation, the first communication apparatus may obtain the identifier of the proximity-based service and the identifier of the target network from a first network element.

In a possible implementation, the first communication apparatus may obtain, from the first network element, the identifier of the proximity-based service and at least one first network identifier corresponding to the identifier of the proximity-based service, where the at least one first network identifier includes the identifier of the target network.

In a possible implementation, the first communication apparatus may determine the target network based on at least one second network identifier and the at least one first network identifier, where the second network identifier identifies a network that is allowed to provide the proximity-based service for the first communication apparatus. According to this implementation, a network that is both the home network of the second communication apparatus and the network that is allowed to provide the proximity-based service for the first communication apparatus can be more accurately determined as the target network. This further reduces a waste of signaling, processing resources, and a delay in the security parameter obtaining process, and enhances performance of the discovery process. Alternatively, the first request includes the identifier of the proximity-based service, at least one first network identifier corresponding to the identifier of the proximity-based service, and at least one second network identifier. Optionally, the first discovery key management network element may determine the target network based on the at least one second network identifier and the at least one first network identifier.

In a possible implementation, the first communication apparatus may obtain the security parameter and the identifier of the security parameter from the first discovery key management network element.

In a possible implementation, the first communication apparatus may further send a first discovery message, where the first discovery message is used for discovery of the second communication apparatus, and the first discovery message is protected by using the security parameter.

In a possible implementation, the first discovery message includes the identifier of the security parameter and the identifier of the security parameter.

In a possible implementation, the first communication apparatus may further receive a second discovery message, where the second discovery message includes the identifier of the security parameter and the identifier of the security parameter, and the second discovery message is used for discovery of the first communication apparatus; the first communication apparatus determines the security parameter based on the identifier of the security parameter; and the first communication apparatus processes the second discovery message based on the security parameter.

For beneficial effects of the method in the fifth aspect and the possible implementations, refer to the descriptions of the beneficial effects of the first aspect or the third aspect and the corresponding implementations of the first aspect or the third aspect. Repeated parts are not described again.

According to any one of the first aspect to the fifth aspect, the first discovery key management network element is a first discovery name management function network element or a first proximity-based service key management function network element, and the second discovery key management network element is a second discovery name management function network element or a second proximity-based service key management function network element.

According to any one of the first aspect to the fifth aspect, the first network element is a policy control function network element or a unified data management network element, to implement unified management and centralized storage of the correspondence.

According to a sixth aspect, a communication apparatus is provided. The apparatus may implement the method according to the first aspect to the fifth aspect and any possible design of the first aspect to the fifth aspect. The apparatus has a function of the first discovery key management network element, the first network element, or the first terminal apparatus.

In an optional implementation, the apparatus may include modules that perform and that are in one-to-one correspondence with the method/operations/steps/actions described in the first aspect to the fifth aspect. The module may be a hardware circuit, may be software, or may be implemented by a combination of a hardware circuit and software. In an optional implementation, the apparatus includes a processing unit (sometimes also referred to as a processing module) and a communication unit (sometimes also referred to as a transceiver module, a communication module, or the like). The transceiver unit can implement a sending function and a receiving function. When the transceiver unit implements the sending function, the transceiver unit may be referred to as a sending unit (sometimes also referred to as a sending module). When the transceiver unit implements the receiving function, the transceiver unit may be referred to as a receiving unit (sometimes also referred to as a receiving module). The sending unit and the receiving unit may be a same functional module, the functional module is referred to as a transceiver unit, and the functional module can implement the sending function and the receiving function. Alternatively, the sending unit and the receiving unit may be different functional modules, and the transceiver unit is a general term for these functional modules.

For example, when the apparatus is configured to perform the method described in the first aspect to the fifth aspect, the apparatus may include the communication unit and the processing unit.

According to a seventh aspect, an embodiment of this application further provides a communication apparatus, including a processor configured to execute a computer program (or computer-executable instructions) stored in a memory. When the computer program (or the computer-executable instructions) is executed, the apparatus is enabled to perform the method according to the first aspect to the fifth aspect and the possible implementations of the first aspect to the fifth aspect.

In a possible implementation, the processor and the memory are integrated.

In another possible implementation, the memory is located outside the communication apparatus.

The communication apparatus further includes a communication interface. The communication interface is for communication between the communication apparatus and another device, for example, for data and/or signal sending or receiving. For example, the communication interface may be a transceiver, a circuit, a bus, a module, or another type of communication interface.

According to an eighth aspect, a computer-readable storage medium is provided. The computer-readable storage medium is configured to store a computer program or instructions. When the computer program or the instructions are run, the method according to the first aspect to the fifth aspect and any possible implementation of the first aspect to the fifth aspect is implemented.

According to a ninth aspect, a computer program product including instructions is provided. When the computer program product runs on a computer, the method according to the first aspect to the fifth aspect and any possible implementation of the first aspect to the fifth aspect is implemented.

According to a tenth aspect, an embodiment of this application further provides a communication apparatus, configured to perform the method according to the first aspect to the fifth aspect and the possible implementations of the first aspect to the fifth aspect.

According to an eleventh aspect, a chip system is provided. The chip system includes a logic circuit (which may alternatively be understood as that the chip system includes a processor, and the processor may include the logic circuit and the like), and may further include an input/output interface. The input/output interface may be configured to input a message, or may be configured to output a message. The input/output interface may be a same interface. In other words, the same interface can implement both a sending function and a receiving function. Alternatively, the input/output interface includes an input interface and an output interface. The input interface is configured to implement a receiving function, that is, configured to receive a message. The output interface is configured to implement a sending function, that is, configured to send a message. The logic circuit may be configured to perform an operation other than the sending and receiving functions in the method according to the first aspect to the fifth aspect and any possible implementation of the first aspect to the fifth aspect. The logic circuit may be further configured to transmit a message to the input/output interface, or receive, from the input/output interface, a message from another communication apparatus. The chip system may be configured to implement the method according to the first aspect to the fifth aspect and any possible implementation of the first aspect to the fifth aspect. The chip system may include a chip, or may include a chip and another discrete device.

Optionally, the chip system may further include a memory, and the memory may be configured to store instructions. The logic circuit may invoke the instructions stored in the memory to implement a corresponding function.

According to a twelfth aspect, a communication system is provided. The communication system may include an apparatus configured to perform the method according to any one of the first aspect and the possible implementations of the first aspect, and an apparatus configured to perform the method according to any one of the second aspect and the possible implementations of the second aspect. Optionally, the communication system may further include an apparatus configured to perform the method according to any one of the third aspect and the possible implementations of the third aspect. Alternatively, the communication system may include an apparatus configured to perform the method according to any one of the fourth aspect and the possible implementations of the fourth aspect, and an apparatus configured to perform the method according to any one of the fifth aspect and the possible implementations of the fifth aspect.

For technical effects of the sixth aspect to the twelfth aspect, refer to the descriptions of the beneficial effects of the corresponding methods or implementations in the first aspect to the fifth aspect. Details are not described again.

### BRIEF DESCRIPTION OF DRAWINGS

FIG. 1 is a diagram of an architecture of a wireless communication system according to an embodiment of this application;
FIG. 2 is a diagram of a ProSe service communication establishment process according to an embodiment of this application;
FIG. 3 is a diagram of a discovery model according to an embodiment of this application;
FIG. 4 is a diagram of a discovery security parameter obtaining procedure according to an embodiment of this application;
FIG. 5 is a schematic flowchart of a communication method according to an embodiment of this application;
FIG. 6A and FIG. 6B are a schematic flowchart of another communication method according to an embodiment of this application;
FIG. 7 is a diagram of a UE discovery procedure according to an embodiment of this application;
FIG. 8 is a schematic flowchart of another communication method according to an embodiment of this application;
FIG. 9 is a schematic flowchart of another communication method according to an embodiment of this application;
FIG. 10 is a diagram of a structure of a communication apparatus according to an embodiment of this application; and
FIG. 11 is a diagram of a structure of another communication apparatus according to an embodiment of this application.

### DESCRIPTION OF EMBODIMENTS

Embodiments of this application provide a communication method and an apparatus. The method and the apparatus are based on a same inventive concept. Because the method and the apparatus have a similar problem-resolving principle, for implementations of the apparatus and the method, refer to each other, and repeated parts are not described again.

Technical solutions provided in embodiments of this application may be applied to various communication systems. For example, the technical solutions may be applied to an LTE system or a 5G system, or may also be applied to another future-oriented new system. This is not specifically limited in embodiments of this application. In addition, the terms "system" and "network" are interchangeable with each other. The following merely uses an architecture of a 5G communication system as an example for description.

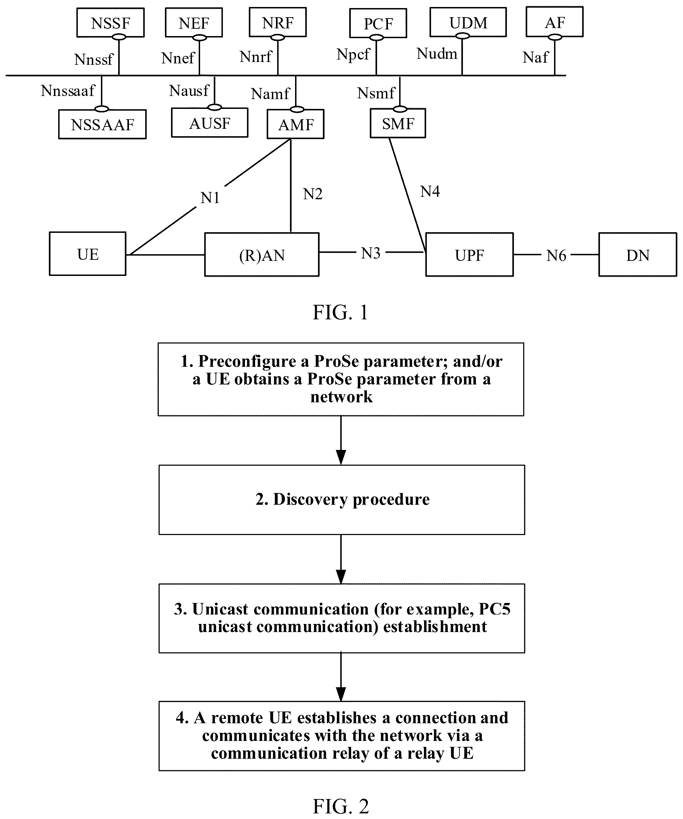

FIG. 1 shows a 5G communication system formulated in a 3rd generation partnership project (3rd generation partnership project, 3GPP) standard. The communication system includes a terminal device (for example, a user equipment (user equipment, UE)), an access network (access network, AN) (for example, a radio access network (radio access network, RAN)), and a core network (core network, CN). Logically, for a data network (data network, DN), network elements of the core network may be divided into two parts: a user plane and a control plane. The control plane is responsible for mobile network management, and the user plane is responsible for service data transmission.

The terminal device is an ingress for interaction between a mobile user and a network, and can provide a basic computing capability and storage capability, display a service window to the user, and receive an operation input by the user. A next generation terminal device (NextGen UE) may establish a signal connection and a data connection to the RAN by using a new radio technology, to transmit a control signal and service data to a mobile network. The terminal device may include various handheld devices, vehicle-mounted devices, uncrewed aerial vehicles, wearable devices, or computing devices that have a wireless communication function, or other processing devices connected to a wireless modem, and various forms of terminals, such as a mobile station (mobile station, MS), a terminal (terminal), and a soft terminal, for example, a water meter, an electricity meter, and a sensor.

The RAN is deployed near the terminal device, provides a network access function for an authorized user in a specific area, and can determine transmission tunnels of different quality based on a user level, a service requirement, and the like to perform transmission of user data. The RAN can manage resources of the RAN, properly use the resources, provide an access service for the terminal device on demand, and is responsible for forwarding the control signal and the user data between the terminal device and the core network.

The core network is responsible for maintaining subscription data of the mobile network, managing a network element of the mobile network, and providing functions such as session management, mobility management, policy management, and security authentication for the terminal device. The core network provides network access authentication for the terminal device when the terminal device is attached; allocates a network resource to the terminal device when the terminal device has a service request; updates a network resource for the terminal device when the terminal device moves; provides a fast recovery mechanism for the terminal device when the terminal device is idle; releases a network resource for the terminal device when the terminal device is detached; and provides a data routing function for the terminal device when the terminal device has service data, for example, forwards uplink data to the data network, or receives downlink data of the terminal device from the data network and forwards the downlink data to the RAN, so that the RAN sends the downlink data to the terminal device.

The data network (data network, DN) is a data network that provides a service for a user. Generally, a client is located in the terminal device, and a server is located in the data network. The data network may be a private network, for example, a local area network, or may be an external network that is not managed or controlled by an operator, for example, the Internet (Internet), or may be a dedicated network jointly deployed by operators, for example, a network that provides an IP multimedia core network subsystem (IP multimedia core network subsystem, IMS) service.

The user plane of the core network includes a user plane function (user plane function, UPF). The control plane of the core network includes an access and mobility management function (access and mobility management function, AMF), a session management function (session management function, SMF), a network exposure function (network exposure function, NEF), a network function repository function (NF repository function, NRF), a unified data management (unified data management, UDM), a policy control function (policy control function, PCF), an application function (application function, AF), an authentication server function (authentication server function, AUSF), a network slice selection function (network slice selection function, NSSF), and a network slice-specific authentication and authorization function (network slice-specific authentication and authorization function, NSSAAF).

The core network control plane uses a service-oriented architecture. A point-to-point communication mode in a conventional architecture is replaced with a service invoking mode for interaction between control plane network elements. In the service-oriented architecture, a control plane network element exposes a service to another control plane network element for invoking by the another control plane function network element. In point-to-point communication, a set of specific messages is stored in a communication interface between the control plane network elements stores, and can be used only by control plane network elements at two ends of the interface during communication.

The following briefly describes functions of functional entities in the core network.
1. A session management network element is mainly configured for session management, IP address assignment and management of the terminal device, selection of an endpoint that can manage a user equipment plane function interface and a policy control or charging function interface, downlink data notification, and the like. In 5G communication, the session management network element may be an SMF network element. In future communication, for example, 6G communication, the session management function network element may still be the SMF network element or have another name. This is not limited in this application. Nsmf is a service-based interface provided by the SMF. The SMF may communicate with another network function through Nsmf.
2. An access management network element is mainly configured for mobility management, access management, and the like. For example, the access management network element may be a mobility management entity (mobility management entity, MME) function in a 4G communication network or an AMF network element in a 5G network. In future communication, for example, 6G communication, the access management network element may still be the AMF network element or have another name. This is not limited in this application. Namf is a service-based interface provided by the AMF. The AMF may communicate with another network function through Namf.
3. A network exposure network element is mainly configured for secure exposure, to the outside, a service, a capability, and the like that are provided by a 3GPP network function. In 5G communication, the network exposure network element may be an NEF network element. In future communication, for example, 6G communication, the network exposure function network element may still be the NEF network element or have another name. This is not limited in this application. Nnef is a service-based interface provided by the NEF. The NEF may communicate with another network function through Nnef.
4. A network repository network element is used for service registration, discovery, and authorization, and maintenance of available network function (network function, NF) instance information, to implement on-demand configuration of a network function and a service and interconnection between NFs. In 5G communication, the network repository network element may be an NRF network element. In future communication, for example, 6G communication, the network repository function network element may still be the NRF network element or have another name. This is not limited in this application. Nnrf is a service-based interface provided by the NRF. The NRF may communicate with another network function through Nnrf.
5. A policy control network element is configured for guiding a unified policy framework for network behavior, and providing policy rule information and the like for a control plane function network element (for example, the AMF or the SMF). In 5G communication, the policy control network element may be a PCF network element. In future communication, for example, 6G communication, the policy control network element may still be the PCF network element or have another name. This is not limited in this application. Npcf is a service-based interface provided by the PCF. The PCF may communicate with another network function through Npcf.
6. A data management network element is configured for user identifier processing, subscription, access authentication, registration, mobility management, or the like. In 5G communication, the data management network element may be a UDM network element. In future communication, for example, 6G communication, the data management network element may still be the UDM network element or have another name. This is not limited in this application. Nudm is a service-based interface provided by the UDM. The UDM may communicate with another network function through Nudm.
7. An application network element is configured for application-affected data routing, accessing a network exposure function, interaction with a policy framework for policy control, or the like. In 5G communication, the application network element may be an AF network element. In future communication, for example, 6G communication, the application network element may still be the AF network element or have another name. This is not limited in this application. Naf is a service-based interface provided by the AF. The AF may communicate with another network function through Naf.
8. A user plane network element is used for packet routing and forwarding, quality of service (quality of service, QoS) handling for user plane data, or the like. In 5G communication, the user plane network element may be a user plane function (user plane function, UPF) network element. In future communication, for example, 6G communication, the user plane network element may still be the UPF network element or have another name. This is not limited in this application.
9. An authentication service network element is mainly configured for user authentication or the like. In 5G communication, the authentication service network element may be an AUSF network element. In future communication, for example, 6G communication, the authentication service network element may still be the AUSF network element or have another name. This is not limited in this application. Nausf is a service-based interface provided by the AUSF. The AUSF may communicate with another network function through Nausf.
10. A network slice selection function network element is configured for selection of a network slice for the terminal device. In 5G communication, the network slice selection function network element may be an NSSF network element. In future communication, for example, 6G communication, the network slice selection function network element may still be the NSSF network element or have another name. This is not limited in this application.
11. A network slice-specific authentication and authorization function network element is mainly responsible for authentication and authorization of a network slice, and may interact with an authentication, authorization, and accounting server (authentication, authorization, and accounting server, AAA-S) through an authentication, authorization, and accounting proxy (authentication, authorization, and accounting proxy, AAA-P).
12. A discovery key management network element is mainly responsible for managing (for example, allocating and storing) a discovery security parameter, where the discovery security parameter may be referred to as a security parameter for short, and is used to protect a related discovery message in a UE discovery process during execution of a proximity-based service. Optionally, the discovery security parameter may alternatively be managed by the PCF. In 5G communication, the discovery key management network element may be a discovery name management function (direct discovery name management function, DDNMF) network element or a proximity-based key management function (proximity-based service key management function, PKMF) network element. The DDNMF network element may also be referred to as a 5G DDNMF network element, and the PKMF network element may also be referred to as a 5G PKMF network element. In future communication, for example, 6G communication, the discovery key management network element may still be the DDNMF network element or the PKMF network element, or have another name. This is not limited in this application.

It may be understood that a xx network element in this application may be referred to as xx for short. For example, the SMF network element is referred to as an SMF for short. In other words, the SMF network element and the SMF are interchangeable with each other.

It may be understood that the core network may further include another network element. This is not limited in this application.

Technical terms in this application are described below.

### (1) ProSe service

With rapid development of mobile communication, universal use of new service types, for example, data services such as video chat, virtual reality (virtual reality, VR), and augmented reality (augmented reality, AR), increases bandwidth requirements of users. D2D communication allows direct communication between UEs, and the UEs may share spectrum resources with cell users under control of a cell network, so that utilization of the spectrum resources is effectively increased. Currently, D2D communication has been applied to a 4G network system, and is collectively referred to as a ProSe service.

D2D communication includes one-to-many communication (one-to-many communication) and one-to-one communication (one-to-one communication). One-to-many communication corresponds to multicast and broadcast communication, and one-to-one communication corresponds to unicast communication. In one-to-one communication, if a transmitting UE and a receiving UE are in a short distance range, the transmitting UE and the receiving UE may directly communicate with each other after mutual discovery. In D2D communication, the UEs communicate with each other through a direct communication protocol (PC5) interface for information transmission on a data plane and a signaling plane. A link on which the UE directly performs direct communication through the PC5 is also referred to as a sidelink (sidelink, SL).

In comparison with conventional cellular network communication, a UE that can be used for ProSe communication needs to have a ProSe function. UEs having the ProSe function communicate with each other through the PC5 interface. For example, a 5G communication system is used as an example. The PCF network element mainly supports providing a policy used for a ProSe service for a UE having a ProSe function, and is responsible for obtaining UE subscription data related to policy decision of a ProSe service function.

For example, the ProSe service may include a UE-to-network relay communication service, a UE-to-UE relay communication service, another PC5 interface-based communication service, or the like. The relay service may be a proximity-based service provided by a relay UE (UE-to-network relay) for a remote UE (remote UE).

### (2) ProSe service communication establishment procedure

Before the ProSe service is formally executed (that is, before ProSe user plane data is formally sent), procedures in steps 1 to 4 shown in FIG. 2 need to be performed, including a ProSe parameter configuration procedure, a ProSe discovery procedure, and a ProSe PC5 unicast establishment procedure. If the ProSe service is a ProSe UE-to-network relay communication service, a remote UE subsequently establishes communication with a network via a communication relay of a relay UE. If the ProSe service is a ProSe UE-to-UE relay communication service, an end UE (end UE) subsequently establishes communication with another end UE (end UE) via a communication relay of a relay UE (UE-to-UE relay). It should be understood that the present invention subsequently uses ProSe UE-to-network relay communication as an example, but should not be limited to this scenario. Actually, a UE-to-UE relay communication service scenario or another subsequent ProSe service scenario may be further included.

### (3) ProSe UE-to-network relay parameter configuration

Step 1 in FIG. 2 is a ProSe parameter configuration procedure. In a current definition of 3GPP technical specification (technical specification, TS) 23.304, ProSe parameters obtained by the UE in step 1 may have different sources and corresponding use priorities. To be specific, a ProSe parameter from the PCF is preferentially used, a ProSe parameter from a ProSe application server (ProSe App server) is then used, a ProSe parameter preconfigured in a universal subscriber identity module (universal subscriber identity module, UICC) is subsequently used, and a ProSe parameter preconfigured in a mobile equipment (mobile equipment, ME) is finally used. The ME is a UE having no UICC.

For the UE-to-network relay scenario, ProSe parameters preconfigured for the remote UE and the relay UE include any one of A, B, and C.

A: Relay service code (relay service code, RSC) identifying a specific relay service, where RSCs corresponding to different UE-to-network relay services are not repeated. For example, an RSC of a UE-to-network relay service A in all public land mobile networks (public land mobile networks) PLMNs is an RSC-A, and two different services do not have a same RSC in different PLMNs or a same PLMN.

B: List of PLMNs in which the remote UE is authorized to use the UE-to-network relay service.

C: List of PLMNs in which the relay UE is authorized to provide the UE-to-network relay service for another UE. The list of PLMNs may be different from the list of PLMNs in which the remote UE is authorized to use the UE-to-network relay service.

Optionally, ProSe parameters of the remote UE may include A and B, and ProSe parameters of the relay UE may include A and C.

### (4) Overview of a ProSe discovery procedure

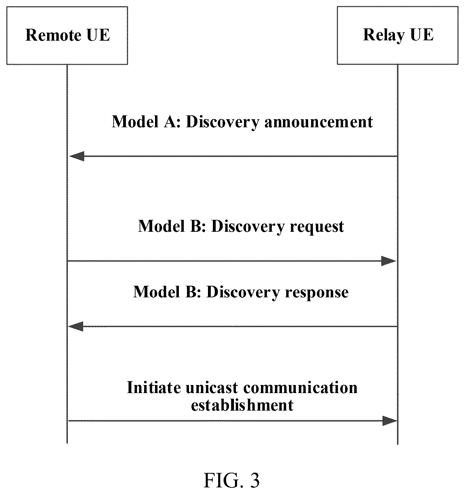

Step 2 in FIG. 2 is a ProSe discovery procedure. The ProSe discovery procedure needs to be executed before ProSe UE-to-network relay communication, to determine a peer end for communication. As shown in FIG. 3, in an existing 4G ProSe standard (for example, referring to 3GPP TS 23.303), there are two discovery models in step 2, namely, a discovery model A (model A) and a discovery model B (model B), and either of the two models is selected for execution. It may be understood that the discovery model A may be referred to as a model A for short, and the discovery model B may be referred to as a model B for short. The model A and the model B may be separately described as follows:

Model A: In a model A discovery procedure, UEs at two ends are classified into an announcing UE (announcing UE, A-UE) and a monitoring UE (monitoring UE, M-UE). After obtaining a ProSe parameter, the announcing UE actively announces a proximity-based service that the announcing UE is interested in. After obtaining a ProSe parameter, the monitoring UE is configured to monitor a proximity-based service that the monitoring UE is interested in. An initial message (for example, a discovery announcement (discovery announcement) shown in FIG. 3) in the model A discovery procedure is initiated by the A-UE. After receiving the message from the A-UE, the M-UE determines, based on whether a service requirement of the M-UE is met, whether to continue a subsequent procedure. The subsequent procedure is, for example, initiating unicast communication establishment. In FIG. 3, the model A is described by using an example in which the relay UE is used as the A-UE and the remote UE is used as the M-UE.

Model B: In a model B discovery procedure, UEs at two ends are classified into a discoveree UE (discoveree UE) and a discoverer UE (discoverer UE). An initial message (for example, a discovery request (discovery request) shown in FIG. 3) in the model B discovery procedure is initiated by the discoverer UE to request a service. After receiving the request, the discoveree UE determines, based on whether the discoveree UE can provide a service, whether to reply to the request message, for example, reply with a discovery response (discovery response). After receiving a reply message, the discoverer UE initiates a subsequent procedure. The subsequent procedure is, for example, initiating unicast communication establishment. In FIG. 3, the model B is described by using an example in which the remote UE is used as the discoverer UE and the relay UE is used as the discoveree UE.

### (5) ProSe UE-to-network relay discovery parameter obtaining procedure

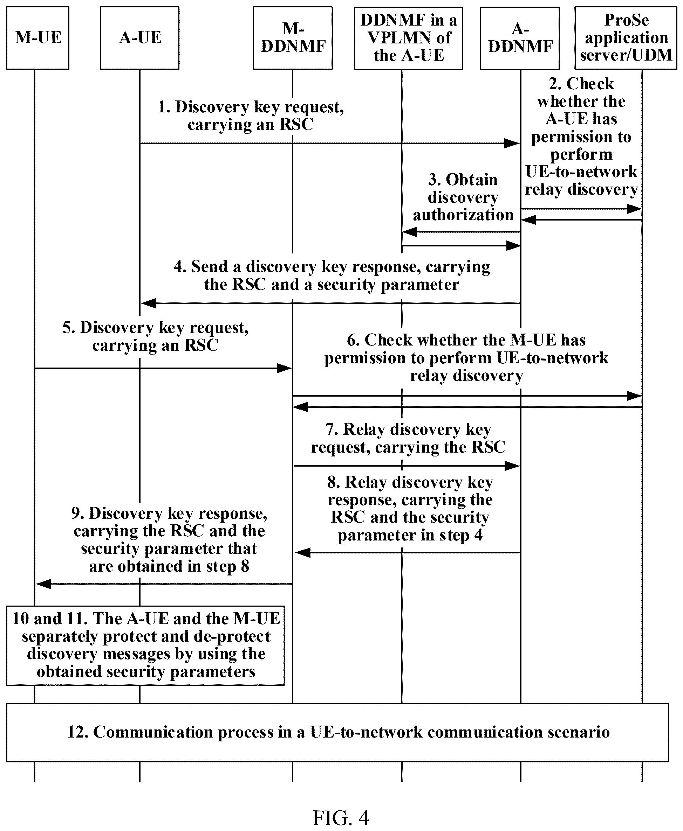

In FIG. 4, the discovery security parameter obtaining procedure is described by using an example in which a ProSe UE-to-network relay scenario is applicable to a model A mode. A model B mode is similar, and a difference lies only in that the M-UE is replaced with the discoverer UE, and the A-UE is replaced with the discoveree UE. Therefore, details are not separately described again. In the figure, descriptions are made by using an example in which a DDNMF manages a discovery security parameter. In the standard, the discovery security parameter may alternatively be managed by a 5G PKMF. Details are not separately described again. In this application, management of the security parameter may include steps such as allocating, maintaining, or distributing the security parameter. It should be noted that FIG. 4 is an accompanying drawing in the standard TS 33.503. In the standard, a same flowchart is used for discovery parameter obtaining in the UE-to-network relay scenario and discovery parameter obtaining in UE-to-UE direct communication. Therefore, a message name and a specific procedure are subject to the following descriptions.
1. The A-UE sends a discovery key request (discovery key request) to a 5G DDNMF in a home public land mobile network (home public land mobile network, HPLMN) of the A-UE, to request to obtain a discovery security parameter used in the UE-to-network relay scenario, where the discovery key request carries an RSC to identify a related UE-to-network relay service. The 5G DDNMF is referred to as an A-DDNMF for short below. The HPLMN may also be referred to as a home network.
2. The A-DDNMF may check, with a UDM, whether the A-UE has permission to perform UE-to-network relay discovery. Therefore, a ProSe application server in the figure may be replaced with the UDM in the HPLMN of the A-UE.
3. If the A-UE is in a visited state, the A-DDNMF obtains discovery authorization from a DDNMF in a visited PLMN (visited PLMN, VPLMN) of the A-UE to determine that the A-UE can perform UE-to-network relay discovery in the VPLMN.
4. The A-DDNMF determines a security parameter used for UE-to-relay discovery performed based on an RSC the same as that in step 1, and sends a discovery key response (discovery key response) to the A-UE, where the discovery key response carries the RSC and the security parameter used for discovery. For example, when the relay UE is the A-UE, a discovery parameter is generated by a DDNMF in an HPLMN of the relay UE. If there are a plurality of relay UEs that belong to different HPLMNs, different discovery security parameters are respectively generated by different DDNMFs in these HPLMNs. If two relay UEs belong to a same HPLMN, the DDNMF may provide a same set of discovery security parameters for the two relay UEs.
5. The M-UE sends a discovery key request to a DDNMF (denoted as an M-DDNMF in FIG. 4) in an HPLMN of the M-UE, to request to obtain a discovery security parameter used in the UE-to-network relay scenario, where the discovery key request carries the RSC to identify a related UE-to-network relay service. The 5G DDNMF is referred to as an A-DDNMF for short below. In this step, because the A-UE and the M-UE need to discover each other subsequently, the RSCs in step 1 and step 5 are the same. In this step, the M-UE may further send, to the M-DDNMF, a list of PLMNs in which the M-UE is authorized to use the UE-to-network relay service.
   It should be additionally noted that, in the standard, the A-UE and the M-UE are allowed to have different HPLMNs, and therefore, DDNMFs corresponding to the A-UE and the M-UE are also different.
6. The M-DDNMF may check, with the UDM, whether the M-UE has permission to perform UE-to-network relay discovery. Therefore, the ProSe App server in the figure may be replaced with the UDM in the HPLMN of the M-UE.
7. The M-DDNMF sends a relay discovery key request (relay discovery key request) to the A-DDNMF to request to obtain a discovery security parameter, where the relay discovery key request carries the RSC. The M-DDNMF may determine, based on the list of PLMNs provided by the M-UE in step 5, a specific DDNMF to which the M-DDNMF needs to send the request.
8. The A-DDNMF replies the M-DDNMF with a relay discovery key response (relay discovery key response), where the relay discovery key response carries the RSC and a security parameter determined in step 4.
   It should be additionally noted that, if the M-DDNMF sends the request to a plurality of A-DDNMFs in step 7, a plurality of security parameters from the plurality of A-DDNMFs may be obtained in step 8.
9. The M-DDNMF sends a discovery key response to the M-UE, where the discovery key response carries the RSC and the security parameter that are obtained in step 8.
10 and 11. The A-UE and the M-UE separately protect and de-protect discovery messages (or process protected discovery messages) by using the obtained security parameters, so that communication is established between the A-UE and the M-UE. For example, in step 10 and step 11, the A-UE and the M-UE may perform discovery by using the discovery model A or the discovery model B.
12. A communication process in the UE-to-network communication scenario is as follows: For example, the A-UE or the M-UE serving as a remote UE establishes a connection to a network via the A-UE or the M-UE serving as a relay UE, and sends data to the network or receive data from the network. This process is not limited in this application.

It should be additionally added that the discovery security parameter may be further configured by the PCF for the UE without executing the foregoing procedure.

Based on the procedure in FIG. 4, reliability of a UE discovery process in a current UE-to-network relay communication service needs to be enhanced. Therefore, reliability of a device discovery process in current proximity-based service communication needs to be enhanced.

The remote UE and the relay UE each are authorized to use a list of PLMNs in the UE-to-network relay service, that is, the UE may use the UE-to-network relay service when being served by a PLMN in the list. However, lists of PLMNs of the two UEs may be different, and HPLMNs of different relay UEs are also different. Therefore, for a UE-to-network relay service (identified by an RSC), there are the following cases (see Table 1):

The remote UE is allowed to use the service in {PLMN-1, PLMN-2, PLMN-3, PLMN-4}. A relay UE-1 and a relay UE-2 are allowed to provide the service in {PLMN-2, PLMN-3, PLMN-4, PLMN-5, PLMN-6}. An HPLMN of the relay UE-1 is the PLMN-5, and an HPLMN of the relay UE-2 is the PLMN-4.

**Table 1**

| | | | | | | |
|---|---|---|---|---|---|---|
| List of PLMNs allowed for the remote UE to use the service | PLMN-1 | PLMN-2 | PLMN-3 | PLMN-4 | | |
| List of PLMNs allowed for the relay UE-1 and the relay UE-2 to provide the service | | PLMN-2 | PLMN-3 | PLMN-4 | PLMN-5 | PLMN-6 |
| HPLMN of the relay UE-1 | | | | | PLMN-5 | |
| HPLMN of the relay UE-2 | | | | PLMN-4 | | |

In this case, as described in steps 1 to 4 in FIG. 4, the relay UE-1 and the relay UE-2 respectively send a discovery key request to a DDNMF in the HPLMN of the relay UE-1 and a DDNMF in the HPLMN of the relay UE-2, and generate security parameters used for discovery. Because the HPLMN of the relay UE-1 and the HPLMN of the relay UE-2 are respectively the PLMN-5 and the PLMN-4, the DDNMF that generates a security parameter of the relay UE-1 is different from the DDNMF that generates a security parameter of the relay UE-2. In this case, the DDNMF (in the PLMN-5) of the relay UE-1 generates a security parameter-1, and the DDNMF (in the PLMN-4) of the relay UE-2 generates a security parameter-2.

Further, as described in step 5, the M-UE may further send, to the M-DDNMF, the list of PLMNs in which the M-UE is authorized to use the UE-to-network relay service. In this case, the DDNMF (M-DDNMF) of the M-UE (remote UE) sends a relay discovery key request only to DDNMFs in the PLMN-1, the PLMN-2, the PLMN-3, and the PLMN-4. As listed in the foregoing table, in this case, only the DDNMF in the PLMN-4 returns the RSC and the security parameter-2 to the DDNMF of the remote UE.

Consequently, in a conventional technology, the following problems are caused:
1. The DDNMF interacts with a plurality of potential DDNMFs, and these DDNMFs may not have corresponding security parameters, resulting in a waste of additional signaling and a delay. For example, as shown in Table 1, the DDNMF corresponding to the remote UE attempts to obtain security parameters from the DDNMFs in the PLMN-1, the PLMN-2, the PLMN-3, and the PLMN-4. However, currently, the UE-2 that can execute a relay service exists only in the PLMN-4. Therefore, although the DDNMF executes the step of requesting (or attempting to obtain) the security parameters from the DDNMFs in the PLMN-1, the PLMN-2, and the PLMN-3, the DDNMF cannot obtain corresponding security parameters, causing a waste of signaling, processing resources, and a delay.
2. The DDNMF interacts with the plurality of potential DDNMFs only based on the list of PLMNs that is provided by the M-UE and in which the M-UE is authorized to use the UE-to-network relay service. However, these PLMNs may not include an HPLMN of a relay (for example, the HPLMN of the relay UE-1). Consequently, a corresponding relay cannot be effectively discovered, and subsequent normal execution of the UE-to-network relay service may be affected. For example, as shown in Table 1, the DDNMF corresponding to the remote UE attempts to obtain security parameters from the DDNMFs in the PLMN-1, the PLMN-2, the PLMN-3, and the PLMN-4. However, currently, the UE-1 that can execute a relay service exists only in the PLMN-5. Therefore, although the DDNMF executes the step of requesting (or attempting to obtain) the security parameters from the DDNMFs in the PLMN-1, PLMN-2, PLMN-3, and the PLMN-4, the DDNMF cannot obtain corresponding security parameters. Consequently, a corresponding relay UE cannot be effectively discovered, and the relay service cannot be normally executed, causing a waste of signaling, processing resources, and a delay.

To improve the reliability of the device discovery process in the proximity-based service and enhance performance of the proximity-based service, this application provides a communication method. In the communication method, a first communication apparatus may send a security parameter obtaining request (which may be referred to as a first request) to a first discovery key management network element in a network (for example, a PLMN) of the first communication apparatus, to request a security parameter. The request may carry an identifier (identifier, ID) of a proximity-based service of the first communication apparatus, for example, an RSC. The identifier of the proximity-based service corresponds to an identifier of a target network, where the target network is a home network of a second terminal apparatus that provides the proximity-based service for the first terminal apparatus. Therefore, the first discovery key management network element may send a security parameter obtaining request (which may be referred to as a second request) to a second discovery key management network element in the target network, to request a security parameter, so that communication can be established between the first communication apparatus and the second communication apparatus based on the security parameter, to implement proximity-based service communication between the first terminal apparatus and the second terminal apparatus. The first communication apparatus and the second communication apparatus each may be a terminal device, for example, a UE. There is a correspondence between the identifier of the proximity-based service and the identifier of the target network. Therefore, the first discovery key management network element can accurately and efficiently determine the second discovery key management network element. This reduces a waste of signaling, processing resources, and a delay in a security parameter obtaining process, and enhances performance of the discovery process.

It may be understood that, in the foregoing process, the discovery key management network element may be a DDNMF or a PKMF, the network and the target network may be PLMNs, and the communication apparatus may be a UE.

It may be further understood that, in embodiments of this application, an action performed by a network element or a device may be replaced with an action performed by a component in the network element or the device. The component in this application may include, for example, at least one of a chip, a chip system, a processor, a transceiver, a processing unit, or a transceiver unit.

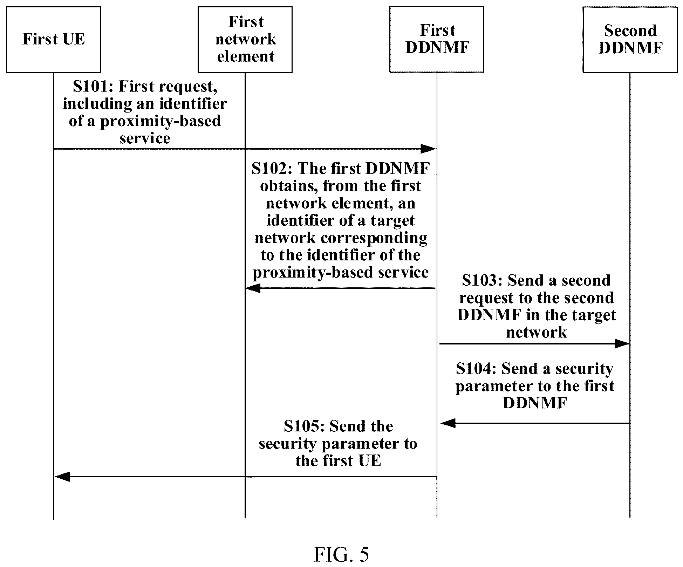

The following describes the method with reference to FIG. 5. In the embodiment shown in FIG. 5, the first discovery key management network element may obtain the identifier of the target network from a first network element. The first network element may be a core network element other than the discovery key management network element, for example, a policy control network element or a data management network element. In FIG. 5, descriptions are made by using an example in which the first communication apparatus and the second communication apparatus are respectively a first UE and a second UE, and the first discovery key management network element is a first DDNMF.

As shown in FIG. 5, the communication method provided in this embodiment of this application may include steps S101 to S105.

S101: The first UE sends a first request to the first DDNMF, where the first request is used to request a security parameter, and the first request includes an identifier of a proximity-based service. The first DDNMF may be a DDNMF in an HPLMN of the first UE.

Correspondingly, the first DDNMF receives the first request.

Optionally, the first request may be a discovery key request, a discovery request, or a relay discovery key request. The discovery key request may be used to request to obtain one or more of the following security parameters: a confidentiality protection key, an integrity protection key, a scrambling protection key, time window information, or the like.

The proximity-based service may be a service provided by the second UE for the first UE. For example, the proximity-based service is a relay service, and in this case, the second UE may be used as a relay UE, and the first UE may be used as a remote UE. In addition, the proximity-based service may alternatively be a service provided by the first UE for the second UE. For example, the first UE may be used as a relay UE, and the second UE may be used as a remote UE. The proximity-based service may alternatively be a service for communication between the second UE and the first UE. For example, the first UE and the second UE establish a connection and perform data communication with each other. In the following descriptions, for example, the proximity-based service is a service provided by the second UE for the first UE. It should be understood that in the following descriptions, the proximity-based service may alternatively be a service provided by the first UE for the second UE, or a service for communication between the second UE and the first UE.

The identifier of the proximity-based service may correspond to an identifier of one or more networks. The identifier of the network is, for example, a PLMN ID. The one or more networks may include an HPLMN of the second UE. For example, the identifier of the proximity-based service may be an RSC. The RSC may identify a specific proximity-based service, for example, the proximity-based service provided by the second UE for the first UE. In this application, the RSC may correspond to the identifier of the one or more networks. The identifier of the one or more networks includes the HPLMN of the second UE, where the HPLMN of the second UE is a target network. In FIG. 5, for example, the second UE is a relay UE. Correspondingly, the target network is a PLMN of a second DDNMF, denoted as a relay HPLMN (relay HPLMN). Therefore, the identifier of the target network may be denoted as a relay HPLMN identifier (relay HPLMN ID). Further, that the RSC may correspond to the identifier of the one or more networks further includes: The identifier of the one or more networks includes identifiers of HPLMNs of a plurality of relay UEs that can provide a service corresponding to the RSC, where the identifiers include the network identifier of the HPLMN of the second UE.

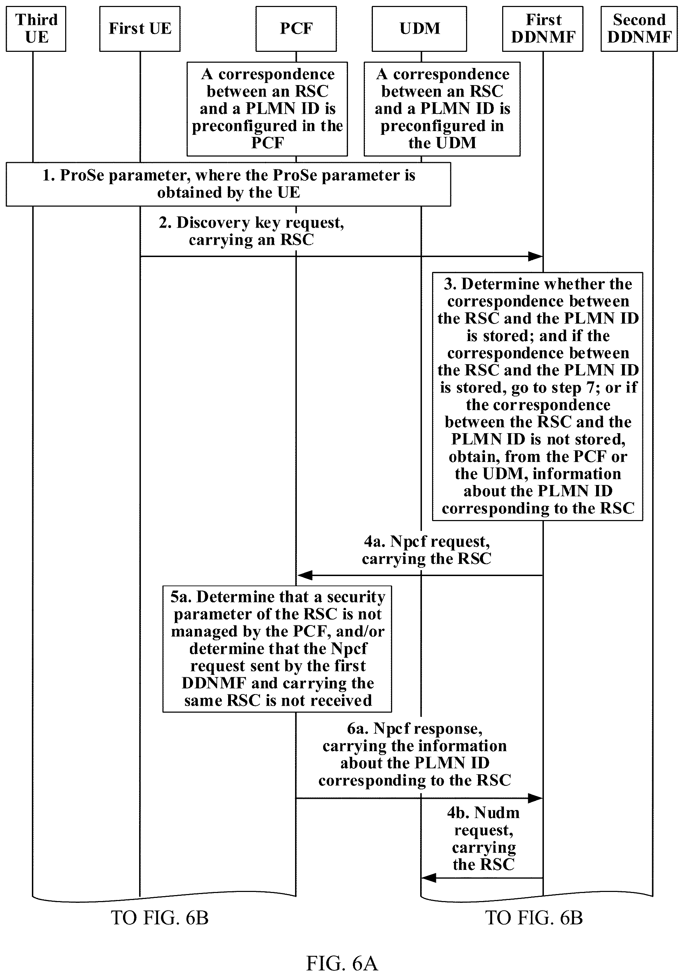

In an embodiment, a correspondence between the identifier of the proximity-based service and the identifier of the network may be preconfigured in a core network element other than the DDNMF. Therefore, the core network element may store the correspondence between the identifier of the proximity-based service and the identifier of the network. For example, the identifier of the proximity-based service is an RSC, and the corresponding identifier of the network is a PLMN ID. A correspondence between the RSC and the PLMN ID is preconfigured in the core network element. The core network element may include the first network element, or may include a core network element other than the first network element and the first DDNMF. This is not specifically limited. For example, as shown in FIG. 6A, the correspondence between the RSC and the PLMN ID is preconfigured in the first network element. The first network element is, for example, a PCF or a UDM. For another example, the correspondence between the RSC and the PLMN ID is preconfigured in the core network element other than the first network element and the first DDNMF. For example, the first network element is a PCF, and the core network element may be a UDM. Further, that the correspondence between the RSC and the PLMN ID is preconfigured in the core network element includes: A correspondence between the RSC and an identifier of an HPLMN of at least one relay UE that can provide a service corresponding to the RSC is preconfigured in the core network element, where the correspondence includes a correspondence between the RSC and the network identifier of the HPLMN of the second UE.

It may be understood that, the PCF or the UDM is used as the first network element, and may store correspondences between identifiers of a large quantity of proximity-based services and corresponding identifiers of target networks. Therefore, a network element in a core network may store the correspondences between the identifiers of the proximity-based services and the identifiers of the target networks in a unified manner, to implement unified management and centralized storage of the correspondences. For example, if the correspondences are preconfigured in a network element, for example, a DDNMF or a PKMF, it is difficult to implement unified storage of the foregoing correspondences due to a limited capability and storage space of the network element, and correspondences related to identifiers of different proximity-based services may need to be stored in different network elements.

Optionally, before S101, the first UE may obtain a ProSe parameter. The ProSe parameter may be used by the first UE to execute a discovery procedure. The ProSe parameter may include the identifier of the proximity-based service in S101, for example, an RSC. In addition, the ProSe parameter may further include information about a PLMN that is allowed to provide the proximity-based service for the first UE, for example, an ID of a PLMN that is allowed to provide the proximity-based service for the first UE or a list including a plurality of PLMN IDs (referred to as a list of PLMNs for short below) that are allowed to provide the proximity-based service for the first UE. It should be noted that the ID of the PLMN that is allowed to provide the proximity-based service for the first UE may further mean that, when the first UE is served by the PLMN, the first UE may use the proximity-based service, or the first UE is allowed to use the proximity-based service.

For example, the first UE may send a ProSe parameter obtaining request to a network, and the AMF sends the request to the PCF. The PCF may obtain ProSe service-related information in subscription information of the first UE from the UDM, to determine the ProSe parameter. The ProSe service-related information is, for example, ProSe service specific information (ProSe service specific information).

It may be understood that, for ease of description below, the identifier of the one or more networks corresponding to the identifier of the proximity-based service is referred to as a first network identifier, and an identifier identifying a network that is allowed to provide the proximity-based service for the first UE is referred to as a second network identifier.

Optionally, the first request may further include the second network identifier, for example, include an ID of a PLMN or a list of PLMNs that are allowed to provide the proximity-based service for the first UE.

S102: The first DDNMF obtains, from the first network element, the identifier of the target network corresponding to the identifier of the proximity-based service.

Optionally, in S102, the first DDNMF may send a network identifier obtaining request to the first network element, where the request may carry the identifier of the proximity-based service, so that the first network element determines the corresponding identifier of the target network based on the identifier of the proximity-based service. Correspondingly, the first network element may determine, based on a correspondence between the identifier of the proximity-based service and the first network identifier, the identifier of the target network corresponding to the identifier of the proximity-based service carried in the network identifier obtaining request. The identifier of the proximity-based service may correspond to at least one first network identifier, and the at least one first network identifier may include the identifier of the target network. In this case, the first network element may send the at least one first network identifier to the first DDNMF.

For example, if the identifier of the proximity-based service is an RSC-1, and in a correspondence between the identifier of the proximity-based service and the at least one first network identifier, the RSC-1 corresponds to an identifier of a PLMN-4, it may be determined that at least one first network identifier corresponding to the RSC-1 is the identifier of the PLMN-4. For another example, if the identifier of the proximity-based service is an RSC-1, and in a correspondence between the identifier of the proximity-based service and the at least one first network identifier, the RSC-1 corresponds to an identifier of a PLMN-4 and an identifier of a PLMN-5, it may be determined that at least one first network identifier corresponding to the RSC-1 is the identifier of the PLMN-4 and the identifier of the PLMN-5.

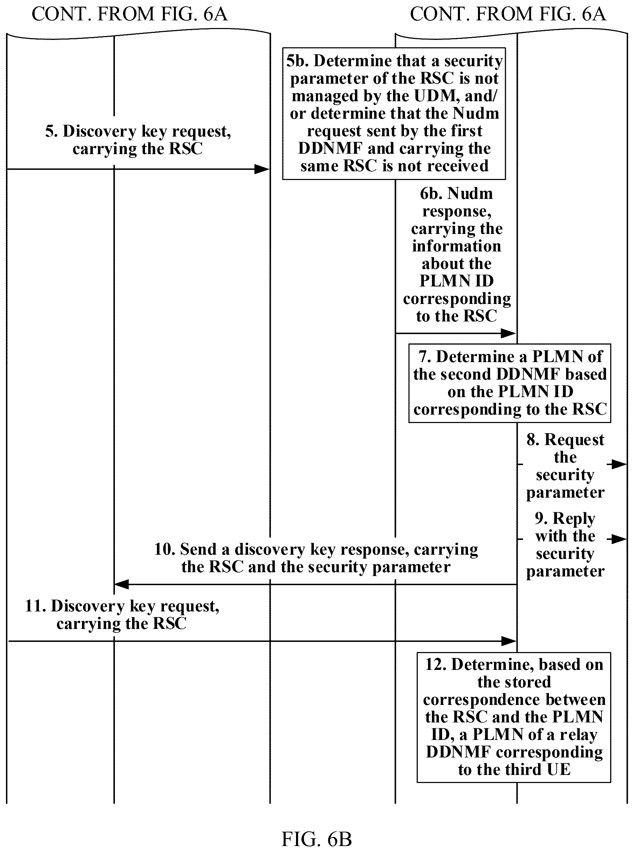

As shown in FIG. 6A, if the first network element is a PCF, a process in which the first DDNMF obtains the at least one first network identifier from the first network element is shown in steps 4a and 6a in FIG. 6A. In step 4a, the first DDNMF may send an Npcf request to the PCF, where the Npcf request carries the RSC and is used to request information about a PLMN ID corresponding to the RSC. In step 6a, the PCF may send an Npcf response to the first DDNMF, where the Npcf response carries the information about the PLMN ID corresponding to the RSC. Similarly, if the first network element is a UDM, a process in which the first DDNMF obtains the at least one first network identifier from the first network element is shown in steps 4b and 6b in FIG. 6A and FIG. 6B.

Optionally, before the first network element provides the identifier of the target network for the first DDNMF in S102, the first network element may determine that a security parameter of the proximity-based service is managed by a DDNMF, or the first network element determines that a security parameter of the proximity-based service is not managed by the first network element. The DDNMF herein includes but is not limited to the first DDNMF. If the security parameter of the proximity-based service is managed by the first network element, the second DDNMF does not need to provide a security parameter, and the first network element may reject sending the identifier of the target network to the first DDNMF.

For example, the first network element is a PCF. The PCF may receive the network identifier obtaining request, and query, based on the identifier of the proximity-based service in the request, whether the security parameter of the proximity-based service is managed by the first network element (namely, the PCF). If the security parameter of the proximity-based service is managed by the PCF, the first network element may send a rejection response message of the request to the first DDNMF, to reject the request. If it is determined that the security parameter of the proximity-based service is not managed by the PCF, or it is determined that the security parameter of the proximity-based service is managed by the DDNMF, the first network element may determine corresponding at least one first network identifier based on the identifier of the proximity-based service. FIG. 6A and FIG. 6B are used as an example. If the PCF is used as the first network element, as shown in step 5a in FIG. 6A, the PCF may determine that the security parameter of the proximity-based service is not managed by the PCF, and then perform step 6a. For example, the network identifier obtaining request is, for example, a core network interface message of the first network element.

For another example, if the first network element is a UDM, the first network element may send the identifier of the proximity-based service to the PCF, and determine, based on response information of the PCF, whether the security parameter of the proximity-based service is managed by the PCF. If the UDM determines that the security parameter of the proximity-based service is managed by the PCF, the UDM may send a rejection response message of the request to the first DDNMF, to reject the request. If the UDM determines that the security parameter of the proximity-based service is not managed by the PCF, or the UDM determines that the security parameter of the proximity-based service is managed by the DDNMF, the UDM may determine corresponding at least one first network identifier based on the identifier of the proximity-based service, and send the at least one first network identifier to the first DDNMF.

Optionally, the first DDNMF may store a correspondence between the identifier of the proximity-based service in the first request and the at least one first network identifier obtained from the first network element, so that after subsequently receiving the discovery key request that carries the identifier of the proximity-based service, the first DDNMF determines, based on the stored correspondence, the at least one first network identifier corresponding to the identifier of the proximity-based service. Therefore, the first DDNMF does not need to request the first network element again for the first network identifier corresponding to the identifier of the proximity-based service. This can further reduce a waste of signaling, processing resources, and a delay in a security parameter obtaining process, and enhance performance of the discovery process.

For example, as shown in FIG. 6A and FIG. 6B, the first DDNMF may obtain a correspondence between the RSC and the PLMN ID through steps 4a and 6a or steps 4b and 6b, and store the correspondence. When a third UE sends, to the first DDNMF in step 11, a discovery key request carrying the same RSC, the first DDNMF may determine, by using the previously stored correspondence between the RSC and the PLMN ID, a target PLMN corresponding to the third UE, to subsequently request the security parameter from a relay DDNMF. It may be understood that the relay DDNMF may be the same as or different from the second DDNMF determined in step 7 in the procedures shown in FIG. 6B. The second DDNMF may be based on a target PLMN corresponding to the first UE.

Before S102, the first DDNMF may further determine that the first DDNMF does not store a correspondence between the identifier of the proximity-based service and a first network identifier. In other words, the first DDNMF does not obtain a first network identifier from the first network element before S102. If the first network element has obtained, before S102, a first network identifier from the first network element based on another network identifier obtaining request that carries the identifier of the proximity-based service, the first network element stores a correspondence between the identifier of the proximity-based service and the first network identifier. When the correspondence is stored, the first DDNMF does not need to perform S102, and the first DDNMF may determine, based on the stored correspondence, the first network identifier corresponding to the identifier of the proximity-based service.

Optionally, if the first network element previously receives the network identifier obtaining request that is sent by the first DDNMF and that carries the identifier of the proximity-based service, the first network element may store the identifier of the proximity-based service, or store a correspondence between the identifier of the proximity-based service and the first DDNMF, so that after subsequently receiving the network identifier obtaining request that carries the identifier of the proximity-based service, the first network element determines, based on the stored identifier of the proximity-based service, that a first network identifier corresponding to the identifier of the proximity-based service has been requested. Therefore, the first network element does not need to provide the first network identifier for the first DDNMF again. After receiving the first request that carries the identifier of the proximity-based service again, the first network element may reject the first request, to avoid processing overheads and signaling overheads caused by repeated queries, and further prevent another network element from pretending to be the first DDNMF to obtain the first network identifier. FIG. 6A and FIG. 6B are used as an example. If the PCF is used as the first network element, as shown in step 5a in FIG. 6A, the PCF may determine that the network identifier obtaining request that is sent by the first DDNMF and that carries the identifier of the proximity-based service is not received previously, and then perform step 6a. If the UDM is used as the first network element, as shown in step 5b in FIG. 6B, the UDM may determine that the network identifier obtaining request that is sent by the first DDNMF and that carries the identifier of the proximity-based service is not received previously, and then perform step 6b.

In S102, after receiving the first network identifier, the first DDNMF may determine the identifier of the target network based on the first network identifier.

The target network may be one or more networks.

In an embodiment, the first DDNMF may use the first network identifier as the identifier of the target network, and therefore may determine the target network based on the identifier of the target network. For example, if the first network identifier is the identifier of the PLMN-4, the target network is the PLMN-4.

In another embodiment, the first DDNMF may determine the identifier of the target network based on at least one first network identifier and at least one second network identifier. The first request may further include the at least one second network identifier, or the first DDNMF may further receive the at least one second network identifier that is sent by the first UE in a message other than the first request.

For example, the identifier of the proximity-based service is an RSC. The first network identifier may include one or more PLMN IDs. The first request further includes a list of PLMNs that are allowed to provide the proximity-based service for the first UE. The list of PLMNs may include at least one PLMN ID, and the at least one PLMN ID is the second network identifier. In this case, the first DDNMF may determine an intersection of the one or more PLMN IDs included in the first network identifier and PLMN IDs included in the list of PLMNs, and use a PLMN ID included in the intersection as the identifier of the target network. In this way, the target network can be determined. For example, the first network identifier includes the identifier of the PLMN-4 and the identifier of the PLMN-5, and the second network identifier includes an identifier of a PLMN-1, an identifier of a PLMN-2, an identifier of a PLMN-3, and the identifier of the PLMN-4. Therefore, the first DDNMF may determine that the identifier of the target network is the identifier of the PLMN-4, that is, the target network is the PLMN-4. For another example, the first network identifier includes the identifier of the PLMN-4 and the identifier of the PLMN-5, and the second network identifier includes an identifier of a PLMN-1, an identifier of a PLMN-2, an identifier of a PLMN-3, the identifier of the PLMN-4, and the identifier of the PLMN-5. Therefore, the first DDNMF may determine, by obtaining an intersection, that the identifier of the target network is the identifier of the PLMN-4 and the identifier of the PLMN-5, that is, the target network is the PLMN-4 and the PLMN-5. In this way, a network that is both a home network of a relay UE and a PLMN that is allowed to provide the proximity-based service for the first UE can be more accurately determined as the target network. This further reduces a waste of signaling, processing resources, and a delay in the security parameter obtaining process, and enhances performance of the discovery process.

Optionally, in S102, after determining the target network, the first DDNMF may further determine whether the target network includes a network of the first DDNMF. If the target network includes the network of the first DDNMF, it indicates that the first DDNMF manages a security parameter. In this case, subsequent S103 and S104 are skipped, a security parameter corresponding to the identifier of the proximity-based service is directly determined locally, and the security parameter is sent to the first UE in S105. It should be noted that, that the first DDNMF determines whether the target network includes the network of the first DDNMF may be determining whether an identifier of one or more networks included in the target network includes an identifier of the network of the first DDNMF. In this way, the locally existing security parameter may be directly sent to the first UE. This further reduces a waste of signaling, processing resources, and a delay in the security parameter obtaining process, and enhances performance of the discovery process.

S103: The first DDNMF sends a second request to a second DDNMF in the target network, where the second request is used to request the security parameter.

The second request may include the identifier of the proximity-based service, for example, an RSC.

Optionally, the second request may be a security parameter request message, for example, a monitoring request (monitoring request), a discovery request, or a relay discovery key request.

It may be understood that, in S103, the target network may be one or more networks. If a quantity of target networks is 1, the first DDNMF may send the second request to the second DDNMF in the target network. If the quantity of target networks is greater than 1, the first DDNMF separately sends the second request to a plurality of second DDNMFs in the plurality of target networks, where each second DDNMF corresponds to one target network, that is, the plurality of second DDNMFs may be respectively located in different HPLMNs.

S104: The second DDNMF sends the security parameter to the first DDNMF.

Correspondingly, the first DDNMF receives the security parameter from the second DDNMF.

Optionally, the second DDNMF may send the security parameter and an identifier of the security parameter to the first DDNMF.

The identifier of the security parameter identifies the security parameter. The identifier of the security parameter may be an ID of a PLMN of the second DDNMF, or may be dedicated identification information. Further, the identifier of the security parameter may be different from the identifier of the proximity-based service, or may be the identifier of the proximity-based service.

Optionally, the security parameter, or the security parameter and the identifier of the security parameter may be carried in a security parameter announcing message, and the second DDNMF sends the security parameter announcing message to the first DDNMF. The security parameter announcing message may be a monitoring response (monitoring response), a discovery response, or a relay discovery key response.

It may be understood that, if the quantity of target networks is 1, the second DDNMF in the target network sends the security parameter to the first DDNMF. If the quantity of target networks is greater than 1, the plurality of second DDNMFs in the plurality of target networks separately send security parameters and/or identifiers of the security parameters to the first DDNMF. Therefore, the first DDNMF may obtain a plurality of (or a plurality of sets of) security parameters and/or identifiers of the security parameters from the plurality of second DDNMFs.

The identifier of the security parameter may identify a specific security parameter used to protect a discovery message, and/or identify a specific security parameter that needs to be used to process the protected discovery message. Therefore, based on the identifier of the security parameter, a receiving UE of the discovery message can accurately determine a specific security parameter to be used to process the protected discovery message, so as to avoid a case in which the receiving UE uses a plurality of sets of security parameters to separately execute a discovery procedure for trial and error to ensure that the receiving UE establishes a connection to a sending UE of the discovery message. This can reduce a waste of signaling, processing resources, and a delay.

The procedures in FIG. 4 are used as an example. It is assumed that both a relay UE-1 and a relay UE-2 support a same UE-to-network relay service, and an RSC-a identifies the relay service. If HPLMNs of the relay UE-1 and the relay UE-2 are different, when the two relay UEs serving as A-UEs perform discovery key request with DDNMFs, the relay UE-1 and the relay UE-2 respectively execute the procedures in steps 1 to 4 in FIG. 4 with a DDNMF in the HPLMN of the relay UE-1 and a DDNMF in the HPLMN of the relay UE-2, and generate security parameters used for discovery. Because the HPLMNs of the relay UE-1 and the relay UE-2 are different, the DDNMFs that generate security parameters also differ. In this case, the DDNMF of the relay UE-1 generates a security parameter-1, and the DDNMF of the relay UE-2 generates a security parameter-2. In this case, both the security parameter-1 and the security parameter-2 are identified by the RSC-a. Therefore, after completing the procedures in steps 5 to 10 in FIG. 4, the remote UE may receive a plurality of sets of security parameters (the security parameter-1 and the security parameter-2) identified by using a unified RSC (the RSC-a). In this case, during subsequent UE-to-network relay service discovery, the remote UE cannot distinguish, by using only the RSC-a in the discovery message, a specific set of security parameters used to perform integrity verification and/or de-confidentiality protection on the discovery message, and the remote UE needs to use the plurality of sets of security parameters to separately execute a discovery procedure for trial and error to ensure that the remote UE establishes a connection to the relay UE, resulting in a waste of signaling, processing resources, and a delay. However, in this embodiment provided in this application, different security parameters may be distinguished by using different identifiers of the security parameters. The remote UE may more accurately learn of, based on an identifier of a security parameter, a specific set of security parameters used to protect the discovery message. For example, when the discovery message includes an identifier corresponding to the security parameter-1, the remote UE may process the protected discovery message only based on the security parameter-1. Therefore, only the security parameter indicated by the identifier needs to be used to process the protected discovery message. This can further reduce a waste of signaling, processing resources, and a delay in the security parameter obtaining process, and enhance performance of the discovery process.

S105: The first DDNMF sends the security parameter to the first UE. Correspondingly, the first UE receives the security parameter. The security parameter may be used by the first UE to perform UE discovery.

The security parameter may be used to protect or process a discovery message, or may be used to receive or process a protected discovery message. Protecting or processing the discovery message may be performing at least one of confidentiality protection, integrity protection, or scrambling protection on all or some discovery messages by using the security parameter. Receiving or processing the protected discovery message may be performing at least one of de-confidentiality protection, message integrity verification, or descrambling protection on all or some protected discovery messages by using the security parameter.

Optionally, in S105, the first DDNMF may send the security parameter and the identifier of the security parameter to the first UE. Correspondingly, the second UE receives the security parameter. The security parameter and the identifier of the security parameter may be used by the second UE to perform UE discovery.

It should be understood that before step S104, the second UE obtains the security parameter and/or the identifier of the security parameter from the second DDNMF. For a specific procedure, refer to steps S101 and S105.

It may be further understood that, if the first DDNMF sends the security parameter and the identifier of the security parameter to the first UE, and the discovery message includes the identifier of the security parameter, the first UE may send the discovery message that is encrypted based on the security parameter. In addition, the first UE may further send the identifier of the security parameter. Optionally, the identifier of the security parameter and the discovery message may be carried in a same message. For example, the discovery message and the identifier of the security parameter may be carried in a same broadcast message, that is, the identifier of the security parameter is not included in the discovery message. In addition, the identifier of the security parameter may alternatively be carried in the discovery message. In this case, the security parameter may be used to protect content other than the identifier of the security parameter in the security message.

The following separately describes possible implementations of a discovery model A and a discovery model B.

In an embodiment, if the quantity of target networks is 1, that is, there is only one target network and one second DDNMF, in S105, the security parameter sent by the first DDNMF to the first UE is one security parameter (or one set of security parameters) allocated by the second DDNMF. Therefore, the first UE may protect a first discovery message by using the security parameter, and broadcast the first discovery message. The discovery message may include the identifier of the proximity-based service. Correspondingly, the second UE may obtain a same security parameter from the second DDNMF, and process and receive, based on the security parameter, the first discovery message sent by the first UE, to establish a connection between the first UE and the second UE. A process of processing the discovery message may include at least one of a de-confidentiality protection operation, a message integrity verification operation, and a descrambling protection operation.

In an embodiment, if the quantity of target networks is greater than 1, that is, there are a plurality of second DDNMFs located in the plurality of target networks, in S105, the security parameter sent by the first DDNMF to the first UE is a plurality of (or a plurality of sets of) security parameters respectively allocated by the plurality of second DDNMFs. The first UE may separately protect a plurality of first discovery messages by using the plurality of security parameters, and broadcast the plurality of first discovery messages. Each discovery message may include the identifier of the proximity-based service. Correspondingly, the second UE may obtain a set of security parameters from a second DDNMF in a respective HPLMN, and process and receive, based on the security parameters, the first discovery messages sent by the first UE. For example, a UE-1 separately sends first discovery messages protected by using the security parameter-1 and the security parameter-2, a UE-2 is located in a HPLMN-1, a UE-3 is located in a HPLMN-2, the UE-2 obtains the security parameter-1 from a DDNMF-1 in the HPLMN-1, and the UE-3 obtains the security parameter-2 from a DDNMF-2 in the HPLMN-2. The UE-2 can only process and receive, based on the security parameter-1, the first discovery message protected by the UE-1 by using the security parameter-1, and the UE-3 can only process and receive, based on the security parameter-2, the first discovery message protected by the UE-1 by using the security parameter-2. In this embodiment, the UE-1 may separately establish communication with the UE-2 and the UE-3, so that the UE-2 and/or the UE-3 can provide the proximity-based service for the UE-1.

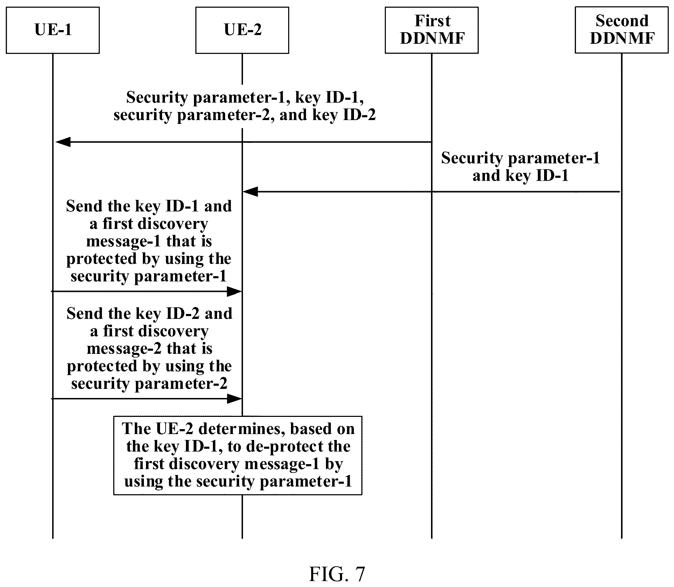

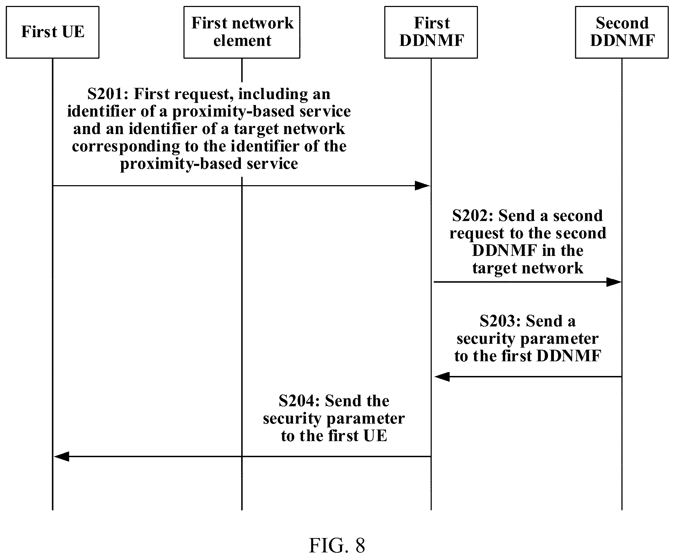

In an embodiment, if the quantity of target networks is greater than 1, that is, there are a plurality of second DDNMFs located in the plurality of target networks, and in S104, the plurality of second DDNMFs send a plurality of security parameters and respective identifiers of the security parameters to the first DDNMF, the first DDNMF may send the plurality of security parameters and the respective identifiers of the security parameters to the first UE in S105. The first UE may separately protect a plurality of discovery messages by using the plurality of security parameters, and broadcast the discovery messages. The discovery messages may include the identifier of the proximity-based service and the identifiers of the security parameters. Correspondingly, the second UE may obtain the identifiers of the security parameters carried in the discovery messages, and process and receive the discovery messages by using the security parameters corresponding to the identifiers. For example, as shown in FIG. 7, in S105, a UE-1 obtains a security parameter-1, an identifier (denoted as a key ID-1) corresponding to the security parameter-1, a security parameter-2, and an identifier (denoted as a key ID-2) corresponding to the security parameter-2, and the UE-1 sends the key ID-1 and a first discovery message-1 that is protected by using the security parameter-1, and sends the key ID-2 and a first discovery message-2 that is protected by using the security parameter-2. A UE-2 is located in a HPLMN-1, and a UE-3 (not shown in FIG. 7) is located in a HPLMN-2. The UE-2 obtains the security parameter-1 and the key ID-1 from a DDNMF-1 in the HPLMN-1, and the UE-3 obtains the security parameter-2 and the key ID-2 from a DDNMF-2 in the HPLMN-2. The UE-2 receives the first discovery information-1 and the corresponding key ID-1, and receives the first discovery message-2 and the corresponding key ID-2. Because the UE-2 has obtained the security parameter-1 and the key ID-1, but does not obtain the security parameter-2 and the key ID-2, the UE-2 only needs to process, based on the security parameter-1, the first discovery information-1 having an identifier of a security parameter the same as that of the security parameter-1, and does not need to process the first discovery information-2, so as to establish communication with the UE-1. Similarly, the UE-3 processes the first discovery information-2 based on the security parameter-2, to establish communication with the UE-1. It may be understood that the first UE in the embodiment shown in FIG. 5 may be used as the UE-1 or the UE-2 in FIG. 8.

Similar to the discovery procedure in which the first UE sends the first discovery message, the first UE may also receive a second discovery message sent by the second UE, and process the second discovery message based on the security parameter, to establish communication between the first UE and the second UE. The second discovery message may carry the identifier of the security parameter, or the second discovery message may be sent together with the identifier of the security parameter.

Optionally, in this application, the first discovery message may be a discovery request in the discovery model B. The second discovery message may be a discovery announcing (discovery announcing) message in the discovery model A, or may be a discovery response message in the discovery model B.

Based on a same inventive concept, this application further provides another communication method shown in FIG. 8. A difference from the embodiment shown in FIG. 5 lies in that, in the embodiment shown in FIG. 8, a first discovery key management network element may obtain an identifier of a target network from a first communication apparatus, instead of obtaining the identifier of the target network from a first network element. In FIG. 8, descriptions are made by using an example in which the first communication apparatus and a second communication apparatus are respectively a first UE and a second UE, and the first discovery key management network element is a first DDNMF. It may be understood that, unless otherwise specified, for technical terms in the embodiment shown in FIG. 8, refer to the descriptions of the same technical terms in the embodiment shown in FIG. 5.

As shown in FIG. 8, the communication method provided in this embodiment of this application may include the following steps.

S201: The first UE sends a first request to the first DDNMF, where the first request is used to request a security parameter, and the first request includes an identifier of a proximity-based service and an identifier of a target network corresponding to the identifier of the proximity-based service. Correspondingly, the first DDNMF receives the first request.

For descriptions of the first request and the security parameter, respectively refer to the descriptions of the first request and the security parameter in S101 in this application. Details are not described herein again. A difference lies in that the first request in S201 may additionally carry the identifier of the target network. In addition, for descriptions of the identifier of the target network, refer to the descriptions of the first request and the security parameter in S102 in this application. For a correspondence between the identifier of the proximity-based service and the identifier of the network, refer to the descriptions in S101 in this application.

Refer to the descriptions of S101 and S102. The identifier of the proximity-based service corresponds to the identifier of the target network. In the embodiment shown in FIG. 8, the first UE may determine, based on the correspondence between the identifier of the proximity-based service and the identifier of the network, a first network identifier corresponding to the identifier of the proximity-based service for UE discovery. The first network identifier may include the identifier of the target network. The correspondence may include correspondences between identifiers of some or all proximity-based services and identifiers of corresponding networks, where and some or all of the proximity-based services may not be limited to the proximity-based service of the first UE.

The first UE may obtain the correspondence between the identifier of the proximity-based service and the identifier of the network from the first network element, and the correspondence may be preconfigured in the first network element. Alternatively, the first network element may obtain the correspondence from another core network element, that is, the correspondence may alternatively be preconfigured in a core network element other than the first network element. Refer to the descriptions of the embodiment shown in FIG. 5. The first network element may be a PCF or a UDM. For example, after determining to execute the proximity-based service (or any proximity-based service), or after the first UE is connected to the Internet, the first UE sends a request for obtaining a correspondence between the identifier of the proximity-based service and the identifier of the network to the first network element, to obtain correspondences between identifiers of all the proximity-based services and identifiers of the networks, and then determines the identifier of the target network based on an identifier of a target proximity-based service that needs to be executed and the correspondences.

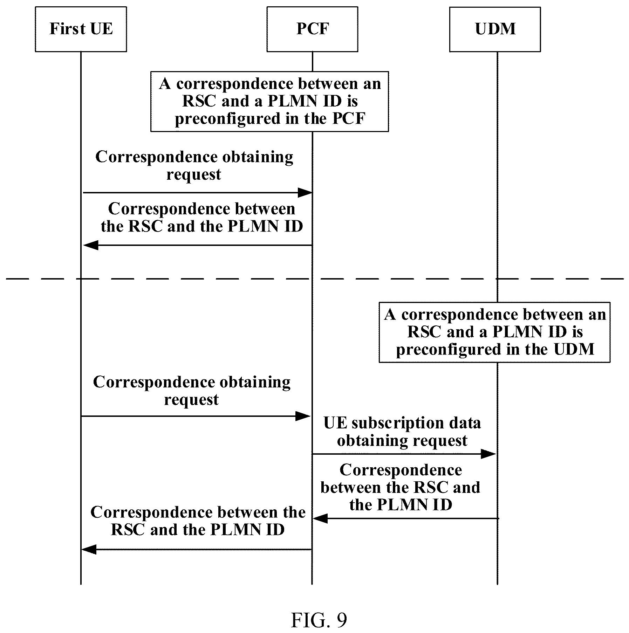

As shown in FIG. 9, for example, the first network element is a PCF. If a correspondence between an RSC and a PLMN ID is preconfigured in the PCF, the PCF may send the correspondence between the RSC and the PLMN ID to the first UE after receiving the request for obtaining the correspondence of the first UE. The request for obtaining the correspondence may be a ProSe parameter obtaining request. Optionally, the correspondence and the ProSe parameter may be carried in a same message for sending. For another example, if a correspondence between an RSC and a PLMN ID is preconfigured in the UDM, after receiving the request for obtaining the correspondence of the first UE, the PCF may obtain the correspondence from the UDM, and then send the correspondence to the first UE. The PCF may send a UE subscription data obtaining request to the UDM, to request the correspondence. The first UE may store the received correspondence.

It should be noted that the request for obtaining the correspondence of the first UE may be a request directly or indirectly from the first UE, or may be a request for obtaining the correspondence used by a core network element, for example, an AMF to request information related to the first UE.

In addition, in the embodiment shown in FIG. 8, after determining to execute the proximity-based service, the first UE may also send, to the first network element, a request for obtaining the identifier of the target network, where the request may carry the identifier of the proximity-based service. Correspondingly, after receiving the request, the first network element may determine, based on the stored correspondence between the identifier of the proximity-based service and the identifier of the network, the identifier of the target network corresponding to the identifier of the proximity-based service, and include the identifier of the target network in a response message sent to the first UE. Optionally, when determining that the first UE does not store the correspondence and/or the identifier of the target network, the first UE requests the first network element for the correspondence between the identifier of the proximity-based service and the identifier of the network and/or the identifier of the target network.

Optionally, before the first network element provides the correspondence between the identifier of the proximity-based service and the identifier of the network and/or the identifier of the target network for the first UE, the first network element may determine that a security parameter of the proximity-based service is managed by a DDNMF, or the first network element determines that a security parameter of the proximity-based service is not managed by the first network element. If the security parameter of the proximity-based service is managed by the first network element, a second DDNMF does not need to provide a security parameter, and the first network element may reject sending the identifier of the target network to the first DDNMF.

Optionally, before requesting the first network element for the correspondence between the identifier of the proximity-based service and the identifier of the network and/or the identifier of the target network, the first UE may further determine that the first UE does not store the correspondence and/or the identifier of the target network, in other words, the first DDNMF does not previously obtain the correspondence and/or the identifier of the target network from the first network element.

In addition, the correspondence between the identifier of the proximity-based service and the identifier of the network may alternatively be preconfigured in the first UE. In this case, the first UE may locally obtain the identifier of the target network.

It may be understood that, in S201, the identifier of the target network and the identifier of the proximity-based service may be carried in a same information element or different information elements. This is not specifically limited.

Optionally, the first request may further include a second network identifier, for example, an ID of a PLMN or a list of PLMNs that are allowed to provide the proximity-based service for the first UE. For details about the ID of the PLMN or the list of PLMNs that are allowed to provide the proximity-based service for the first UE, refer to the descriptions in step S101. In this case, it may be considered that the first request sent by the first UE in S101 includes at least one first network identifier, where the at least one first network identifier includes the identifier of the target network. Refer to the descriptions of S102. The first DDNMF may determine the identifier of the target network based on the first network identifier and the second network identifier.

Alternatively, optionally, the identifier of the target network in S201 may be determined based on the first network identifier and the second network identifier. Specifically, for the method in which the first UE determines the identifier of the target network based on the first network identifier and the second network identifier, refer to the same method in which the first DDNMF determines the identifier of the target network based on the first network identifier and the second network identifier in step S102. Details are not described again. In other words, after determining the identifier of the target network based on the first network identifier and the second network identifier, the first UE may include the identifier of the target network in the first request, to avoid a case in which excessive network identifiers are carried in the first request. This can reduce signaling overheads. In addition, this can avoid obtaining of a security parameter allocated by a DDNMF in a network that does not allow the first UE to use the proximity-based service. The first UE may obtain, from the first network element, the identifier of the proximity-based service and at least one first network identifier corresponding to the identifier of the proximity-based service, that is, obtain a correspondence between the identifier of the proximity-based service and the at least one first network identifier. The at least one first network identifier may include the identifier of the target network.

In addition, alternatively, the first UE may send at least one first network identifier and at least one second network identifier to the first DDNMF. Therefore, the first DDNMF determines the identifier of the target network based on the at least one first network identifier and the at least one second network identifier. For example, the first UE may include, in the first request, the identifier of the proximity-based service, at least one first network identifier corresponding to the identifier of the proximity-based service, and at least one second network identifier.

Optionally, before S101, the first UE may obtain a ProSe parameter. For a manner in which the first UE obtains the ProSe parameter, refer to the descriptions in S101.

In an optional implementation, the first UE may obtain the ProSe parameter from the first network element, and obtain the correspondence between the identifier of the proximity-based service and the at least one first network identifier. For example, the ProSe parameter and the correspondence are carried in a same message or different messages.

S202: The first DDNMF sends a second request to a second DDNMF in the target network, where the second request is used to request the security parameter.

Optionally, if the first request in S201 includes at least one first network identifier, and the first UE further sends a second network identifier to the first DDNMF, the first DDNMF may determine the identifier of the target network based on the first network identifier and the second network identifier. For details, refer to the descriptions in S102.

Optionally, before S202, after determining the target network, the first DDNMF may further determine whether the target network includes a network of the first DDNMF. If the target network includes the network of the first DDNMF, it indicates that the first DDNMF manages a security parameter. In this case, S202 and S203 are skipped, a security parameter corresponding to the identifier of the proximity-based service is directly determined locally, and the security parameter is sent to the first UE in S204.

S203: The second DDNMF sends the security parameter to the first DDNMF.

Correspondingly, the first DDNMF receives the security parameter from the second DDNMF.

Optionally, the second DDNMF sends the security parameter and an identifier of the security parameter to the first DDNMF. Correspondingly, the first DDNMF receives the security parameter and the identifier of the security parameter from the second DDNMF.

S204: The first DDNMF sends the security parameter to the first UE. Correspondingly, the first UE receives the security parameter.

Optionally, the first DDNMF sends the security parameter and the identifier of the security parameter to the first UE.

For implementations of S202 to S204, refer to S103 to S105. Repeated parts are not described again.

In addition, in the embodiment shown in FIG. 8, after obtaining the security parameter, the first UE may perform UE discovery with reference to the descriptions in the embodiment shown in FIG. 5. For example, after obtaining the security parameter and the identifier of the security parameter, the first UE performs UE discovery with reference to the procedure shown in FIG. 7. The first UE may be used as the UE-1 or the UE-2 in FIG. 7.

It may be understood that, to implement a function in the foregoing embodiments, the first DDNMF, the first network element, and the first UE each may include a corresponding hardware structure and/or software module for performing the foregoing function. A person skilled in the art should be easily aware that, in this application, the units and method steps in the examples described with reference to embodiments disclosed in this application can be implemented by hardware or a combination of hardware and computer software. Whether a function is performed by hardware or hardware driven by computer software depends on particular application scenarios and design constraint conditions of the technical solutions.

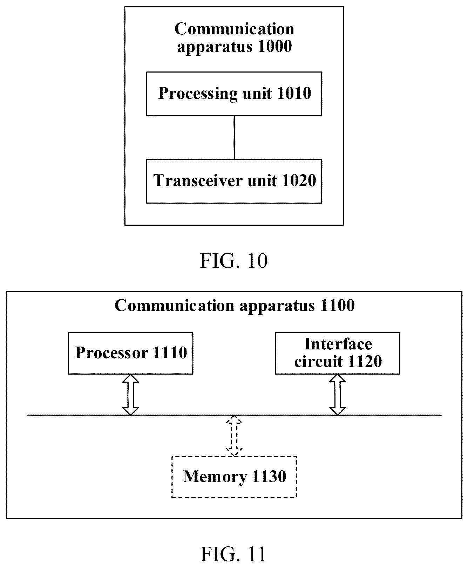

Each of FIG. 10 and FIG. 11 is a diagram of a structure of a possible communication apparatus according to an embodiment of this application. These communication apparatuses may be configured to implement a function of the first discovery key management network element, the first network element, or the first communication apparatus in the foregoing method embodiments, and therefore can also implement beneficial effects of the foregoing method embodiments. The first discovery key management network element may be a first DDNMF or a first PKMF, the first network element may be a PCF or a UDM, and the communication apparatus may be a first UE. In this embodiment of this application, the first UE may be the UE shown in FIG. 1.

As shown in FIG. 10, a communication apparatus 1000 includes a processing unit 1010 and a transceiver unit 1020. The communication apparatus 1000 is configured to implement a function of the first discovery key management network element, the first network element, or the first communication apparatus in the method embodiment shown in any one of FIG. 5 to FIG. 9.

When the communication apparatus 1000 is configured to implement a function of the first discovery key management network element in the method embodiment shown in FIG. 5, the transceiver unit 1020 is configured to: receive a first request, obtain an identifier of a target network from the first network element, send a second request to a second discovery key management network element, receive a security parameter from the second discovery key management network element, and send the security parameter to the first communication apparatus; and the processing unit 1010 may be configured to determine the identifier of the target network.

When the communication apparatus 1000 is configured to implement a function of the first network element in the method embodiment shown in FIG. 5, the transceiver unit 1020 is configured to provide an identifier of a target network for the first network element, and the processing unit 1010 is configured to determine the identifier of the target network.

When the communication apparatus 1000 is configured to implement a function of the first communication apparatus in the method embodiment shown in FIG. 5, the transceiver unit 1020 is configured to send a first request to the first discovery key management network element, and receive a security parameter from the first discovery key management network element.

When the communication apparatus 1000 is configured to implement a function of the first discovery key management network element in the method embodiment shown in FIG. 8, the transceiver unit 1020 is configured to: receive a first request, send a second request to a second discovery key management network element, receive a security parameter from the second discovery key management network element, and send the security parameter to the first communication apparatus; and the processing unit 1010 may be configured to obtain an identifier of a target network from the first request.

When the communication apparatus 1000 is configured to implement a function of the first UE in the method embodiment shown in FIG. 8, the transceiver unit 1020 is configured to send a first request to the first discovery key management network element, and receive a security parameter from the first discovery key management network element; and the processing unit 1010 may be configured to add an identifier of a target network to the first request.

For more detailed descriptions of the processing unit 1010 and the transceiver unit 1020, refer to the related descriptions in the method embodiment shown in any one of FIG. 5 to FIG. 9. For example, for technical terms in the foregoing actions of the processing unit 1010 and the transceiver unit 1020, refer to the descriptions in the foregoing method embodiments. Details are not described again.

As shown in FIG. 11, a communication apparatus 1100 includes a processor 1110 and an interface circuit 1120. The processor 1110 and the interface circuit 1120 are coupled to each other. It can be understood that the interface circuit 1120 may be a transceiver or an input/output interface. Optionally, the communication apparatus 1100 may further include a memory 1130, configured to store instructions executed by the processor 1110, input data needed by the processor 1110 to run instructions, or data generated after the processor 1110 runs instructions.

When the communication apparatus 1100 is configured to implement the method shown in any one of FIG. 5 to FIG. 9, the processor 1110 is configured to implement a function of the processing unit 1010, and the interface circuit 1120 is configured to implement a function of the transceiver unit 1020.

When the communication apparatus is a chip used in the first discovery key management network element, the first network element, or the first communication apparatus, the chip implements a function of the first discovery key management network element, the first network element, or the first communication apparatus in the foregoing method embodiments. The terminal chip receives, through the first discovery key management network element, the first network element, or another module (for example, a radio frequency module, an antenna, or a communication interface) in the first communication apparatus, information sent by another network element or device to the first discovery key management network element, the first network element, or the first communication apparatus. Alternatively, the chip sends information to the first discovery key management network element, the first network element, or another module (for example, a radio frequency module, an antenna, or an interface) in the first communication apparatus, where the information is sent by the first discovery key management network element, the first network element, or the first communication apparatus to another network element or device.

It may be understood that, the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor or the like.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk, a read-only memory (compact disc read-only memory, CD-ROM), or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the first discovery key management network element, the first network element, or the first communication apparatus. The processor and the storage medium may alternatively exist as discrete components in the first discovery key management network element, the first network element, or the first communication apparatus.

An embodiment of this application further provides a communication system, including one or more network elements or apparatuses of the first discovery key management network element, the first network element, or the first communication apparatus configured to implement the foregoing method embodiments.

An embodiment of this application further provides a computer-readable storage medium. The computer-readable storage medium is configured to store a computer program or instructions. When the computer program or the instructions are run, the method in the foregoing method embodiments is implemented.

An embodiment of this application further provides a computer program product. When the computer program product runs on a computer, the method in the method embodiments is implemented.

All or some of the foregoing embodiments may be implemented by software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, the procedures or functions in embodiments of this application are all or partially executed. The computer may be a general-purpose computer, a dedicated computer, a computer network, a network device, a user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In the descriptions of this application, terms such as "first" and "second" are merely used for differentiated description, and cannot be understood as an indication or implication of relative importance, or cannot be understood as an indication or implication of an order. It should be noted that a sequence of "first", "second", and the like is not limited in this application. For example, "second" may appear first, and then "first" appears. This is not limited in this application.

In the descriptions of this application, "at least one (type)" means one (type) or more (types), and "a plurality of (types)" means two (types) or more (types). In addition, "at least one of the following items" or a similar expression thereof means any combination of these items, including any combination of singular items or plural items. For example, at least one of a, b, or c may indicate a, b, c, a and b, a and c, b and c, or a, b, and c, where a, b, and c may be singular or plural. In the descriptions of this application, "/" represents "or". For example, a/b represents a or b.

In embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
receiving, by a first discovery key management network element, a first request from a first communication apparatus, wherein the first request is used to request a security parameter, and the first request comprises an identifier of a proximity-based service provided by a second communication apparatus for the first communication apparatus;
obtaining, by the first discovery key management network element, an identifier of a target network corresponding to the identifier of the proximity-based service, wherein the target network is a home network of the second communication apparatus;
sending, by the first discovery key management network element, a second request to a second discovery key management network element in the target network, wherein the second request is used to request the security parameter;
receiving, by the first discovery key management network element, the security parameter from the second discovery key management network element; and
sending, by the first discovery key management network element, the security parameter to the first communication apparatus.

2. The method according to claim 1, wherein the obtaining, by the first discovery key management network element, the identifier of the target network corresponding to the identifier of the proximity-based service comprises:
obtaining, by the first discovery key management network element from a first network element, the identifier of the target network corresponding to the identifier of the proximity-based service, wherein the target network is the home network of the second communication apparatus.

3. The method according to claim 2, wherein the method further comprises:
sending, by the first discovery key management network element, a network identifier obtaining request to the first network element, wherein the network identifier obtaining request is used to request the identifier of the target network, and the network identifier obtaining request comprises the identifier of the proximity-based service.

4. The method according to claim 2 or 3, wherein the obtaining, by the first discovery key management network element from the first network element, the identifier of the target network comprises:
obtaining, by the first discovery key management network element, at least one first network identifier from the first network element, wherein the at least one first network identifier comprises the identifier of the target network, and the at least one first network identifier corresponds to the identifier of the proximity-based service; and
the method further comprises:
receiving, by the first discovery key management network element, at least one second network identifier from the first communication apparatus, wherein the second network identifier identifies a network that is allowed to provide the proximity-based service for the first communication apparatus; and
determining, by the first discovery key management network element, the target network based on the at least one second network identifier and the at least one first network identifier.

5. The method according to any one of claims 1 to 4, wherein the method further comprises:
storing, by the first discovery key management network element, a correspondence between the identifier of the proximity-based service and the identifier of the target network.

6. The method according to any one of claims 1 to 5, wherein the receiving, by the first discovery key management network element, the security parameter from the second discovery key management network element comprises:
receiving, by the first discovery key management network element, a security parameter announcing message from the second discovery key management network element, wherein the security parameter announcing message comprises the security parameter and an identifier of the security parameter; and
the sending, by the first discovery key management network element, the security parameter to the first communication apparatus comprises:
sending, by the first discovery key management network element, a security parameter response message to the first communication apparatus, wherein the security parameter response message comprises the security parameter and the identifier of the security parameter.

7. The method according to claim 6, wherein the identifier of the security parameter is the identifier of the target network.

8. The method according to any one of claims 1 to 7, wherein the first discovery key management network element is a first discovery name management function network element or a first proximity-based service key management function network element, and the second discovery key management network element is a second discovery name management function network element or a second proximity-based service key management function network element.

9. The method according to any one of claims 2 to 4, wherein the first network element is a policy control function network element or a unified data management network element.

10. The method according to any one of claims 1 to 9, wherein the method further comprises:
obtaining, by the first communication apparatus, the security parameter and the identifier of the security parameter from the first discovery key management network element.

11. The method according to any one of claims 1 to 10, wherein the method further comprises:
sending, by the first communication apparatus, a first discovery message, wherein the first discovery message is used for discovery of the second communication apparatus, the first discovery message is protected by using the security parameter, and the first discovery message comprises the identifier of the security parameter.

12. The method according to any one of claims 1 to 10, wherein the method further comprises:
receiving, by the first communication apparatus, a second discovery message, wherein the second discovery message comprises the identifier of the security parameter, and the second discovery message is used for discovery of the first communication apparatus;
determining, by the first communication apparatus, the security parameter based on the identifier of the security parameter; and
processing, by the first communication apparatus, the second discovery message based on the security parameter.

13. A communication method, comprising:
determining, by a first network element, an identifier of a target network corresponding to an identifier of a proximity-based service, wherein the proximity-based service is provided by a second communication apparatus for a first communication apparatus; and
sending, by the first network element, the identifier of the target network to a first discovery key management network element, wherein the target network is a home network of the second communication apparatus.

14. The method according to claim 13, wherein the method further comprises:
receiving, by the first network element, a network identifier obtaining request from the first discovery key management network element, wherein the network identifier obtaining request is used to request the identifier of the target network, and the network identifier obtaining request comprises the identifier of the proximity-based service.

15. The method according to claim 13 or 14, wherein the determining, by the first network element, the identifier of the target network corresponding to the identifier of the proximity-based service comprises:
determining, by the first network element, at least one first network identifier corresponding to the identifier of the proximity-based service, wherein the at least one first network identifier comprises the identifier of the target network; and
the sending, by the first network element, the identifier of the target network to the first discovery key management network element comprises:
sending, by the first network element, the at least one first network identifier to the first discovery key management network element.

16. The method according to any one of claims 13 to 15, wherein the method further comprises:
determining, by the first network element, that the first network element does not allocate a security parameter to the proximity-based service; or
determining, by the first network element, that the first discovery key management network element allocates a security parameter to the proximity-based service.

17. The method according to any one of claims 13 to 16, wherein the method further comprises:
storing, by the first network element, a correspondence between the first discovery key management network element and the identifier of the proximity-based service.

18. The method according to any one of claims 13 to 17, wherein the first network element is a policy control function network element or a unified data management network element.

19. The method according to any one of claims 13 to 18, wherein the first discovery key management network element is a discovery name management function network element or a proximity-based service key management function network element.

20. A communication method, comprising:
receiving, by a first discovery key management network element, a first request from a first communication apparatus, wherein the first request is used to request a security parameter, the security parameter is used for discovery of a communication apparatus, the first request comprises an identifier of a proximity-based service and an identifier of a target network corresponding to the identifier of the proximity-based service, the target network is a home network of a second communication apparatus, and the proximity-based service is a service provided by the second communication apparatus for the first communication apparatus;
sending, by the first discovery key management network element, a second request to a second discovery key management network element in the target network, wherein the second request is used to request the security parameter;
receiving, by the first discovery key management network element, the security parameter from the second discovery key management network element; and
sending, by the first discovery key management network element, the security parameter to the first communication apparatus.

21. The method according to claim 20, wherein the first request comprises the identifier of the proximity-based service and at least one first network identifier corresponding to the identifier of the proximity-based service, the at least one first network identifier comprises the identifier of the target network, and before sending the second request to the second discovery key management network element in the target network, the method further comprises:
receiving, by the first discovery key management network element, at least one second network identifier from the first communication apparatus, wherein the second network identifier identifies a network that is allowed to provide the proximity-based service for the first communication apparatus; and
determining, by the first discovery key management network element, the target network based on the at least one second network identifier and the at least one first network identifier.

22. The method according to claim 20 or 21, wherein the receiving, by the first discovery key management network element, the security parameter from the second discovery key management network element comprises:
receiving, by the first discovery key management network element, the security parameter and an identifier of the security parameter from the second discovery key management network element; and
the sending, by the first discovery key management network element, the security parameter to the first communication apparatus comprises:
sending, by the first discovery key management network element, a security parameter response message to the first communication apparatus, wherein the security parameter response message comprises the security parameter and the identifier of the security parameter.

23. The method according to claim 22, wherein the identifier of the security parameter is the identifier of the target network.

24. The method according to any one of claims 20 to 23, wherein the first discovery key management network element is a first discovery name management function network element or a first proximity-based service key management function network element, and the second discovery key management network element is a second discovery name management function network element or a second proximity-based service key management function network element.

25. A communication method, comprising:
sending, by a first communication apparatus, a first request to a first discovery key management network element, wherein the first request is used to request a security parameter, the first request comprises an identifier of a proximity-based service and an identifier of a target network corresponding to the identifier of the proximity-based service, the proximity-based service is a proximity-based service provided by a second communication apparatus for the first communication apparatus, and the target network is a home network of the second communication apparatus; and
receiving, by the first communication apparatus, the security parameter from the first discovery key management network element.

26. The method according to claim 25, wherein the method further comprises:
obtaining, by the first communication apparatus, the identifier of the proximity-based service and the identifier of the target network from a first network element.

27. The method according to claim 26, wherein the obtaining, by the first communication apparatus, the identifier of the proximity-based service and the identifier of the target network from the first network element comprises:
obtaining, by the first communication apparatus from the first network element, the identifier of the proximity-based service and at least one first network identifier corresponding to the identifier of the proximity-based service, wherein the at least one first network identifier comprises the identifier of the target network.

28. The method according to claim 27, further comprising:
determining, by the first communication apparatus, the target network based on at least one second network identifier and the at least one first network identifier, wherein the second network identifier identifies a network that is allowed to provide the proximity-based service for the first communication apparatus;
or
comprising, by the first request, the identifier of the proximity-based service, the at least one first network identifier corresponding to the identifier of the proximity-based service, and at least one second network identifier, wherein the second network identifier identifies a network that is allowed to provide the proximity-based service for the first communication apparatus.

29. The method according to claim 27 or 28, wherein the first network element is a policy control function network element or a unified data management network element.

30. The method according to any one of claims 25 to 29, wherein the receiving, by the first communication apparatus, the security parameter from the first discovery key management network element comprises:
receiving, by the first communication apparatus, the security parameter and an identifier of the security parameter from the first discovery key management network element.

31. The method according to claim 30, wherein the method further comprises:
sending, by the first communication apparatus, a first discovery message, wherein the first discovery message is used for discovery of the second communication apparatus, the first discovery message is protected by using the security parameter, and the first discovery message comprises the identifier of the security parameter.

32. The method according to claim 30, wherein the method further comprises:
receiving, by the first communication apparatus, a second discovery message, wherein the second discovery message comprises the identifier of the security parameter, and the second discovery message is used for discovery of the first communication apparatus;
determining, by the first communication apparatus, the security parameter based on the identifier of the security parameter; and
processing, by the first communication apparatus, the second discovery message based on the security parameter.

33. The method according to claim 32, wherein the identifier of the security parameter is the identifier of the target network.

34. The method according to any one of claims 25 to 33, wherein the first discovery key management network element is a discovery name management function network element or a proximity-based service key management function network element.

35. A communication method, comprising:
sending, by a first communication apparatus, a first request to a first discovery key management network element, wherein the first request is used to request a security parameter of a proximity-based service, the proximity-based service is a proximity-based service provided by a second communication apparatus for the first communication apparatus, and the first request comprises an identifier of the proximity-based service; and
obtaining, by the first communication apparatus, the security parameter and an identifier of the security parameter.

36. The method according to claim 35, wherein the obtaining, by the first communication apparatus, the security parameter and the identifier of the security parameter comprises:
receiving, by the first communication apparatus, the security parameter and the identifier of the security parameter from the first discovery key management network element.

37. The method according to claim 35 or 36, wherein the method further comprises:
sending, by the first communication apparatus, a first discovery message, wherein the first discovery message is used for discovery of the second communication apparatus, and the first discovery message is protected by using the security parameter.

38. The method according to claim 37, wherein the first discovery message comprises the identifier of the security parameter.

39. The method according to any one of claims 36 to 38, wherein the method further comprises:
receiving, by the first communication apparatus, a second discovery message, wherein the second discovery message comprises the identifier of the security parameter, and the second discovery message is used for discovery of the first communication apparatus;
determining, by the first communication apparatus, the security parameter based on the identifier of the security parameter; and
processing, by the first communication apparatus, the second discovery message based on the security parameter.

40. The method according to claim 38, wherein the identifier of the security parameter is an identifier of the target network.

41. A communication method, comprising:
receiving, by a first discovery key management network element, a first request from a first communication apparatus, wherein the first request is used to request a security parameter, and the first request comprises an identifier of a proximity-based service provided by a second communication apparatus for the first communication apparatus;
obtaining, by the first discovery key management network element, an identifier of a target network corresponding to the identifier of the proximity-based service, wherein the target network is a home network of the second communication apparatus;
sending, by the first discovery key management network element, a second request to a second discovery key management network element in the target network, wherein the second request is used to request the security parameter;
receiving, by the second discovery key management network element, the second request from the first discovery key management network element;
sending, by the second discovery key management network element, the security parameter to the first discovery key management network element based on the second request;
receiving, by the first discovery key management network element, the security parameter from the second discovery key management network element; and
sending, by the first discovery key management network element, the security parameter to the first communication apparatus.

42. The method according to claim 41, wherein the method further comprises the method according to any one of claims 2 to 12.

43. The method according to claim 41 or 42, wherein the method further comprises the method according to any one of claims 13 to 19.

44. The method according to any one of claims 41 to 43, wherein the method further comprises the method according to any one of claims 25 to 40.

45. A communication method, comprising:
receiving, by a first discovery key management network element, a first request from a first communication apparatus, wherein the first request is used to request a security parameter, the security parameter is used for discovery of a communication apparatus, the first request comprises an identifier of a proximity-based service and an identifier of a target network corresponding to the identifier of the proximity-based service, the target network is a home network of a second communication apparatus, and the proximity-based service is a service provided by the second communication apparatus for the first communication apparatus;
sending, by the first discovery key management network element, a second request to a second discovery key management network element in the target network, wherein the second request is used to request the security parameter;
receiving, by the second discovery key management network element, the second request from the first discovery key management network element;
sending, by the second discovery key management network element, the security parameter to the first discovery key management network element based on the second request;
receiving, by the first discovery key management network element, the security parameter from the second discovery key management network element; and
sending, by the first discovery key management network element, the security parameter to the first communication apparatus.

46. The method according to claim 45, wherein the method further comprises the method according to any one of claims 21 to 24.

47. The method according to claim 45 or 46, wherein the method further comprises the method according to any one of claims 25 to 40.

48. A communication apparatus, comprising a processor, wherein the processor is configured to execute a computer program or instructions, to implement the method according to any one of claims 1 to 40.

49. The apparatus according to claim 48, further comprising a memory and/or a transceiver, wherein the memory is configured to store the computer program or the instructions, and the transceiver is used by the apparatus for communication.

50. A computer-readable storage medium, wherein the storage medium stores a computer program or instructions, and when the computer program or the instructions are executed by a communication apparatus, the method according to any one of claims 1 to 40 is implemented.

51. A computer program product, comprising a computer program or instructions, wherein when the computer program or the instructions are executed by a computer, the computer is caused to implement the method according to any one of claims 1 to 40.

52. A communication system, comprising a first discovery key management network element and a second discovery key management network element, wherein the first discovery key management network element is configured to perform the method according to any one of claims 1 to 12 and 20 to 24; and
the second discovery key management network element is configured to: receive a second request from the first discovery key management network element, and send the security parameter to the first discovery key management network element based on the second request.

53. The communication system according to claim 52, further comprising a first network element, wherein the first network element is configured to perform the method according to any one of claims 13 to 19.

54. The communication system according to claim 52 or 53, further comprising a first communication apparatus, wherein the first communication apparatus is configured to perform the method according to any one of claims 25 to 40.
